# EUROPÄISCHE PATENTSCHRIFT

(11) **EP 2 389 313 B1**
(45) Veröffentlichungstag und Bekanntmachung des Hinweises auf die Patenterteilung: **25.12.2013**
(21) Anmeldenummer: 10701627.1
(22) Anmeldetag: 26.01.2010
(51) Int. Cl.: B64C 9/18, B64C 21/02, B64C 21/08

(54) **Flügel eines Flugzeugs mit einem Hauptflügel und einer an diesem angeordneten Stellklappe**
Aircraft wing with a main wing and a control flap installed on said wing
Aile d'avion avec une aile principale et un clapet de commande qui est disposé dans ledit aile

(30) Priorität: 26.01.2009 US 147196 P; 26.01.2009 DE 102009006145
(43) Veröffentlichungstag der Anmeldung: 30.11.2011
(73) Patentinhaber: Airbus Operations GmbH, 21129 Hamburg (DE)
(72) Erfinder: GÖLLING, Burkhard, 21244 Buchholz in der Nordheide (DE); HANSEN, Heinz, 28844 Weyhe (DE); RADESPIEL, Rolf, 38108 Braunschweig (DE); JENSCH, Christoph, 38118 Braunschweig (DE); PFINGSTEN, Kai-Christoph, 20251 Hamburg (DE); NEITZKE, Klaus-Peter, 28259 Bremen (DE)
(74) Vertreter: UEXKÜLL & STOLBERG
(86) Internationale Anmeldenummer: PCT/EP2010/000447
(87) Internationale Veröffentlichungsnummer: WO 2010/084025

(56) Entgegenhaltungen:
- EP-A1- 0 558 904
- EP-A1- 1 873 395
- WO-A2-2007/072259
- DE-B- 1 165 419
- DE-C- 584 585
- US-A- 2 427 972
- US-A- 5 366 177
- US-A1- 2007 034 746
- US-A1- 2007 051 855

## Beschreibung

Die Erfindung betrifft eine Stellklappe und insbesondere eine Hochauftriebsklappe, eine Anordnung einer Stellklappe mit einer Vorrichtung zur Strömungsbeeinflussung an derselben sowie ein Flugzeug mit einer derartigen Anordnung.

Die Dokumente US 2007/0034746, welche als nächstliegender Stand der Technik betrachtet wird, und die US 2007/0051855 offenbaren einen Hauptflügel und eine daran bewegbar angekoppelte Stellklappe jeweils mit Öffnungen zum Einsaugen oder Ausblasen von Luft. Die künstliche Erzeugung einer Zirkulation an einem Strömungskörper mittels einer Einsaugöffnung und einer Ausblasöffnung ist im Dokument DE 584585 beschrieben. Ein Einsaugen und Ausblasen am Hauptflügel offenbart die US 2 427 972. Ein Flugzeug mit Ausblasöffnungen an der Unterseite des Hauptflügels und der Hinterkantenklappe ist in der PCT/IB2006/054550 dargestellt.

Aus der DE 10 2006 028 167 A1 ist ein Verfahren zum Betreiben einer Vorrichtung bekannt, die zumindest einen fluiddynamischen Auftriebskörper und z.B. eine Windenergieanlage mit Rotorblättern, ein Flugzeug mit Tragflächen, ein Hubschrauber mit Rotorblättern aufweist. Dabei werden mittels geeigneter Sensoren, Kennwerte erfasst, die kennzeichnend sind für das Auftreten von auftriebskörperbedingten Verwirbelungen des diesen umgebenden Mediums, insbesondere auftriebskörperbedingten Geräuschen, und/oder für das Auftreten von Strömungsabrissen an dem Auftriebskörper und/oder für ein Vereisen des Auftriebskörpers. Abhängig von den erfassten Kennwerten wird aus einer Mehrzahl von einem oder jedem Auftriebskörper zugeordneten Fluid-Austrittsöffnungen ein aus einer Druckquelle stammendes Fluid, etwa Luft, derart nach außen an das den Auftriebskörper umgebende Medium geleitet, dass durch die resultierenden Fluidströmungen die auftriebskörperbedingten Verwirbelungen und/oder die Strömungsabrisse und/oder das Vereisen reduziert oder verhindert werden.

Die US 5,772,165 B1 und die US 5,366,177 A beschreiben einen Flügel, auf dessen Oberseite mehrere Absaugöffnungen eingelassen sind, um zur Stabilisierung der Grenzschicht entlang der Oberseite Luft von der diese umströmenden Luft abzuzweigen.

Aus der DE 1 147 850 ist ein Flügel mit einer vor dieser angeordneten Störklappe bekannt, wobei ein Strömungsmittel als flacher Strahl unterhalb der Störklappe oder aus der Vorderkante der Störklappe nach vorn ausgestoßen wird, so dass es infolge der Vorwärtsbewegung des Flugzeugs seinen Weg nach rückwärts über die obere Fläche der Störklappe nimmt, um durch Wirbelbildung bei kleinen Anstellwinkeln einen hohen Auftrieb zu erzeugen.

Aufgabe der Erfindung ist, einen Flügel eines Flugzeugs mit einem Hauptflügel und einer an diesem angeordneten Stellklappe mit der eine optimierte Stabilisierung der Grenzschichtströmung erreichbar ist, die an einem Flügel und einer Stellklappe insbesondere in ihrem ausgelenkten Zustand anliegt.

Diese Aufgabe wird mit den Merkmalen des unabhängigen Patentanspruchs gelöst. Weitere Ausführungsformen sind in den auf diese rückbezogenen Unteransprüchen angegeben.

Erfindungsgemäß ist insbesondere eine Stellklappe eines Flugzeugs, die insesondere eine Hochauftriebsklappe ist, vorgesehen, die eine erste Seitenfläche und eine zweite Seitenfläche aufweist, die jeweils entlang der Klappentiefenrichtung verlaufen und die bestimmungsgemäß in einer Strömungsrichtung umströmt werden, wobei die erste Seitenfläche bei der Stellklappe bestimmungsgemäß eine entlang einer Saugseite verlaufende Oberseite und dabei die zweite Seite eine entlang einer Druckseite der Stellklappe verlaufende Unterseite ist, wobei an der Stellklappe zumindest eine Luftausblas-Öffnung und zumindest eine über zumindest eine Luftleitung mit der Luftausblas-Öffnung in Verbindung stehende Lufteinlass-Öffnung angeordnet ist, wobei mit der Luftleitung ein Strömungsförderantrieb zur Beeinflussung der Strömung innerhalb der Luftleitung integriert ist, und wobei an den Seitenflächen der Stellklappe in der Klappentiefen-Richtung gesehen folgende Öffnungen vorgesehen sind:
- zumindest eine Luftausblas-Öffnung, die im in Strömungsrichtung gesehen vorderen und sich bis zu 15% der Klappentiefe erstreckenden Bereich der Stellklappe angeordnet ist und
- zumindest eine Lufteinlass-Öffnung, die auf der Oberseite der Stellklappe und im in Strömungsrichtung gesehen hinteren sich zwischen 30 % und 90 % der Klappentiefe erstreckenden Bereich der Stellklappe und/oder auf der Oberseite der Stellklappe im von 90 % bis 100 % der Klappentiefe erstreckenden Hinterkantenbereich und/oder auf der Unterseite der Stellklappe im von 90 % bis 100 % der Klappentiefe erstreckenden Hinterkantenbereich der Stellklappe angeordnet ist.

Dabei kann insbesondere vorgesehen sein, dass die zumindest eine Luftausblas-Öffnung und die zumindest eine Luftausblas-Öffnung innerhalb eines Abschnitts gelegen sind, der eine sich in der Spannweitenrichtung der Stellklappe erstreckende Breite von 80 % der Klappentiefe hat, wobei die Klappentiefe an einer der Luftausblas-Öffnung oder der Luftausblas-Öffnung besteht. Generell kann die Stellklappe genau eine Luftausblas-Öffnung aufweisen, die auf der Oberseite der Stellklappe und in dem vorderen von 0 % bis 15 % der Klappentiefe erstreckenden Bereich gelegen ist.

Nach einem weiteren Ausführungsbeispiel kann vorgesehen sein, dass die Stellklappe eine erste vordere Luftausblas-Öffnung und zumindest eine zweite hintere Luftausblas-Öffnung aufweist, wobei die zweite hintere Luftausblas-Öffnung in der Strömungsrichtung gesehen hinter der ersten vorderen Luftausblas-Öffnung und in dem vorderen sich von 3 % bis 15 % der Klappentiefe erstreckenden Bereich der Stellklappe gelegen ist. Die erste vordere Luftausblas-Öffnung kann dabei in dem vorderen sich von 0 % bis 3 % der Klappentiefe erstreckenden Bereich der Stellklappe und am vordersten Ende oder der Oberseite der Stellklappe gelegen sein. Alternativ dazu kann die erste vordere Luftausblas-Öffnung in dem vorderen sich von 0 % bis 3 % der Klappentiefe erstreckenden Bereich der Stellklappe und am vordersten Ende oder der Unterseite der Stellklappe gelegen sein.

Eine Auslassöffnung kann in einem vorderen Bereich der Stellklappe gelegen sein, der bei einer Stellung der Stellklappe von 60 Grad ± 8 Grad oder bei der voll ausgefahrenen Stellung der Stellklappe in der Flügeldickenrichtung des Hauptflügels gesehen unterhalb der hinteren oberen Kante des Hauptflügels gelegen ist und der sich von dem Ort, der genau unterhalb der hinteren oberen Kante des Hauptflügels gelegen ist, in zwei zueinander entgegen gesetzten Richtungen der Strömungsrichtung um 3 % der Klappentiefe erstreckt.

Die Stellklappe kann in der Klappentiefe gesehen eine Konturlinie des vorderen Bereichs der Stellklappe aufweisen, die sich entlang der Oberseite in Strömungsrichtung oder in Klappentiefenrichtung gesehen sich von einem Krümmungsradius, der den Betrag von 3 % der Profiltiefe der Stellklappe hat, kontinuierlich steigend zu einem Krümmungsradius verändert, der den Betrag von 12 % der Profiltiefe der Stellklappe hat, wobei die Profiltiefe jeweils an derjenigen Stelle in der Spannweitenrichtung der Stellklappe maßgebend ist, an der zumindest eine der beiden Auslassöffnungen gelegen sind.

Auch kann vorgesehen sein, dass Auslassöffnungen der Stellklappe in der Klappentiefe gesehen in einem Bereich der Konturlinie gelegen sind, in dem sich der Krümmungsradius der Konturlinie des vorderen Bereichs der Stellklappe entlang der Oberseite in Strömungsrichtung oder in Klappentiefenrichtung gesehen sich von einem Krümmungsradius, der den Betrag von 3 % der Profiltiefe der Stellklappe hat, kontinuierlich steigend zu einem Krümmungsradius verändert, der den Betrag von 12 % der Profiltiefe der Stellklappe hat, wobei die Profiltiefe jeweils an derjenigen Stelle in der Spannweitenrichtung der Stellklappe maßgebend ist, an der zumindest eine der beiden Auslassöffnungen gelegen sind.

Generell können mehrere Luftausblas-Öffnungen in Spannweitenrichtung und im bis zu 15% der Klappentiefe erstreckenden Bereich nebeneinander angeordnet sein. Auch können mehrere Lufteinlass-Öffnungen in Spannweitenrichtung nebeneinander angeordnet sein.

Die Stellklappe nach der Erfindung kann eine gegenüber einem Strukturbauteil eines Flugzeugs verstellbare Stellklappe sein. Dabei kann das Strukturbauteil ein Hauptflügel und die Stellklappe eine Hochauftriebsklappe sein. Auch kann das Strukturbauteil ein Rumpfbauteil und die Stellklappe ein Canard sein.

Nach der Erfindung ist auch ein Seitenruder eines Flugzeugs vorgesehen, das eine erste Seitenfläche und eine zweite Seitenfläche aufweist, die jeweils entlang der Klappentiefenrichtung verlaufen und die bestimmungsgemäß in einer Strömungsrichtung umströmt werden, wobei an dem Seitenruder auf jeder der entgegen gesetzt zueinander gelegenen Seitenflächen zumindest eine Luftausblas-Öffnung und zumindest eine über zumindest eine Luftleitung mit der Luftausblas-Öffnung in Verbindung stehende Lufteinlass-Öffnung angeordnet ist, wobei mit der Luftleitung ein Strömungsförderantrieb zur Beeinflussung der Strömung innerhalb der Luftleitung integriert ist, und wobei an den Seitenflächen des Seitenruders in der Klappentiefen-Richtung gesehen folgende Öffnungen vorgesehen sind:
- zumindest eine Luftausblas-Öffnung im in Strömungsrichtung gesehen vorderen und sich bis zu 15% der Klappentiefe erstreckenden Bereich des Seitenruders (K) angeordnet ist und
- zumindest eine Lufteinlass-Öffnung (23), die im in Strömungsrichtung gesehen hinteren sich zwischen 30 % und 90 % der Klappentiefe erstreckenden Bereich und/oder im von 90 % bis 100 % der Klappentiefe erstreckenden Hinterkantenbereich des Seitenruders angeordnet ist.

Nach einem weiteren Ausführungsbeispiel der Erfindung ist eine Anordnung einer Stellklappe mit einer Vorrichtung zur Strömungsbeeinflussung an derselben vorgesehen, wobei die Stellklappe mit einem Strömungsförderantrieb nach einem der vorangehenden Ansprüche gebildet ist und wobei die Vorrichtung zur Strömungsbeeinflussung aufweist:
- eine mit der Stellklappen-Verstellvorrichtung funktional in Verbindung stehende Ansteuerungsvorrichtung zur Steuerung des Strömungsförderantriebs, wobei die Ansteuerungsvorrichtung von einer Stellklappen-Verstellvorrichtung als Eingangsgröße den Verstellzustand der Stellklappe empfängt, und
- eine mit dem Strömungsförderantrieb funktional in Verbindung stehende Ansteuerfunktion zur Erzeugung eines Kommandosignals zur Steuerung des Durchsatzes des Strömungsförderantriebs aufweist, die aus dem Verstellzustand der Stellklappe ein entsprechendes Steuerungssignal zur Ansteuerung der Strömungsförderantrieb erzeugt.

Die Stellklappe kann dabei insbesondere nach einem erfindungsgemäßen Ausführungsbeispiel gebildet sein.

Nach einem weiteren Ausführungsbeispiel der Erfindung ist eine Anordnung einer Stellklappe mit einer Vorrichtung zur Strömungsbeeinflussung an derselben vorgesehen, wobei die Vorrichtung zur Strömungsbeeinflussung aufweist:
- an zumindest einer Ausblasöffnung an der Stellklappe und/oder an zumindest einer Einlassöffnung der Stellklappe jeweils eine Öffnungveränderungs-Vorrichtung zum Öffnen und Schließen der zumindest einen Ausblasöffnung und/oder der zumindest einen Einlassöffnung mit einer Öffnungveränderungs-Mechanik und einen an diese angekoppelten Aktuator zum Betätigen der jeweiligen Öffnungveränderung-Mechanik,
- die Ansteuerungsvorrichtung zur Steuerung des Aktuators der jeweiligen Öffnungveränderungs-Vorrichtung mit der Stellklappen-Verstellvorrichtung funktional in Verbindung steht und von dieser als Eingangsgröße den Verstellzustand der Stellklappe empfängt, wobei die Ansteuerungsvorrichtung eine mit dem jeweiligen Aktuator funktional in Verbindung stehende Ansteuerfunktion zur Erzeugung eines Kommandosignals zur Steuerung des Aktuators aufweist, die aus dem Verstellzustand der Stellklappe ein entsprechendes Signal zum Öffnen und Schließen der zumindest einen Ausblasöffnung und/oder der zumindest einen Auslassöffnung erzeugt und an den Aktuator übermittelt.

Dabei kann insbesondere vorgesehen sein, dass die Vorrichtung zur Strömungsbeeinflussung aufweist:
- einen Strömungsförderantrieb zur Beeinflussung der Strömung innerhalb der Luftleitung, die mit zumindest einer Ausblasöffnung an der Stellklappe und mit zumindest einer Einlassöffnung an der Stellklappe in Verbindung steht,
- eine Sensorvorrichtung mit zumindest einem an der Oberseite der Stellklappe angeordneten Sensor zur Erfassung von aktuellen Strömungswerten an der Oberseite der Stellklappe;
- eine Regelungsvorrichtung mit einer Regelungsfunktion zur Regelung eines vorgegebenen Strömungswertes der Stellklappe, die funktional in Verbindung steht mit der Sensorvorrichtung zum Empfang von aktuellen Strömungswerten, mit der Stellklappen-Verstellvorrichtung zum Empfang eines Wertes für den Verstellzustand der Stellklappe und mit dem Strömungsförderantrieb zur Erzeugung eines Steuersignals zur Steuerung des Durchsatzes des Strömungsförderantriebs.

Die in den Ausführungsbeispielen der Erfindung vorgesehene Sensorvorrichtung kann einen Sensor zur Erfassung des Strömungszustands der auf der Oberseite der Stellklappe anliegenden oder abgelösten Strömung aufweisen. Der Sensor kann ein Sensor zur Erfassung der Strömungsgeschwindigkeit sein. Dabei kann der Sensor ein Piezo-Wandschubspannungssensor zur Erfassung der Wandschubspannung sein. Die Regelungsvorrichtung kann in der Stellklappe angeordnet sein.

Nach einem weiteren Ausführungsbeispiel der Erfindung ist eine Anordnung einer Stellklappe mit einer Vorrichtung zur Strömungsbeeinflussung an derselben vorgesehen, wobei die Stellklappe nach einem Ausführungsbeispiel der Erfindung gebildet ist und wobei die Vorrichtung zur Strömungsbeeinflussung aufweist:
- an zumindest einer Ausblasöffnung an der Stellklappe und/oder an zumindest einer Einlassöffnung der Stellklappe jeweils eine Öffnungveränderungs-Vorrichtung zum Öffnen und Schließen der zumindest einen Ausblasöffnung und/oder der zumindest einen Einlassöffnung mit einer Öffnungveränderungs-Mechanik und einen an diese angekoppelten Aktuator (zum Betätigen der jeweiligen Öffnungveränderungs-Mechanik,
- eine Sensorvorrichtung mit zumindest einem an der Oberseite der Stellklappe angeordneten Sensor zur Erfassung von aktuellen Strömungswerten an der Oberseite der Stellklappe;
- eine Regelungsvorrichtung mit einer Regelungsfunktion zur Regelung eines vorgegebenen Strömungswertes der Stellklappe, die funktional in Verbindung steht mit: der Sensorvorrichtung zum Empfang von aktuellen Strömungswerten von der Sensorvorrichtung, der Stellklappen-Verstellvorrichtung zum Empfang eines Wertes für den Verstellzustand der Stellklappe von der Stellklappen-Verstellvorrichtung und dem zumindest einen Aktuator zur Erzeugung eines Kommandosignals durch Regelungsvorrichtung und zum Übermitteln des Kommandosignals an den Aktuator zur Einstellung der Öffnungs- und Schließstellung der jeweiligen Öffnungveränderungs-Vorrichtung.

Nach einem weiteren Ausführungsbeispiel der Erfindung ist eine Anordnung eines Hauptflügels und einer Anordnung einer Stellklappe mit einer Vorrichtung zur Strömungsbeeinflussung an derselben vorgesehen, wobei die Anordnung einer Stellklappe mit einer Vorrichtung zur Strömungsbeeinflussung an derselben nach einem Ausführungsbeispiel der Erfindung gebildet ist und wobei der Hauptflügel einen Kanal aufweist, der von einer an der Druckseite des Hauptflügels angeordneten Einlassöffnungen zu einer an rückseitigen, der Stellklappe zugewandten Oberfläche des Hauptflügels angeordneten Luftausblas-Öffnung verläuft, so dass die zwischen der Ausblasöffnung und der Luftausblas-Öffnung auftretende Luftströmung die Strömung im Spalt zwischen dem Hauptflügel und der Stellklappe beeinflusst.

Dabei kann vorgesehen sein,
dass in dem im Hauptflügel angeordneten Kanal ein von der Ansteuerungsvorrichtung angesteuerter Strömungsförderantrieb installiert ist, mit der die Strömung im Kanal und im Spalt zwischen dem Hauptflügel und der Stellklappe beeinflusst werden kann und der von der Ansteuerungsvorrichtung angesteuert wird, und/oder
dass an der Ausblasöffnung des Hauptflügels eine von der Ansteuerungsvorrichtung angesteuerte Öffnungveränderungs-Vorrichtung zum Öffnen und Schließen der Ausblasöffnung angeordnet ist, um die Strömung im Kanal und im Spalt zwischen dem Hauptflügel und der Stellklappe zu beeinflussen.

Nach einem weiteren Ausführungsbeispiel der Erfindung ist ein Flugzeug mit einem aerodynamischen Körper und einer daran bewegbaren Stellklappe mit einer Steuerungsvorrichtung mit einer Klappen-Ansteuerfunktion zur Einstellung der Stellklappen vorgesehen,
wobei die Stellklappen jeweils eine erste Seitenfläche und eine zweite Seitenfläche aufweisen, die jeweils entlang der Klappentiefenrichtung verlaufen und die bestimmungsgemäß in einer Strömungsrichtung umströmt werden, wobei die erste Seitenfläche der Stellklappe bestimmungsgemäß eine entlang einer Saugseite verlaufende Oberseite und dabei die zweite Seite eine entlang einer Druckseite der Stellklappe verlaufende Unterseite ist, wobei an den Stellklappen jeweils zumindest eine Luftausblas-Öffnung und zumindest eine über zumindest eine Luftleitung mit der Luftausblas-Öffnung in Verbindung stehende Lufteinlass-Öffnung angeordnet ist,
- wobei mit der Luftleitung ein Strömungsförderantrieb zur Beeinflussung der Strömung innerhalb der Luftleitung integriert ist, und
- wobei aufgrund von Steuerungskommandos die Steuerungsvorrichtung Ansteuerungskommandos zur Einstellung eines Verstellzustands der Stellklappen und Ansteuerungskommandos an den Strömungsförderantrieb zur Einstellung des Durchsatzes des Strömungsförderantriebs erzeugt und an diese übermittelt.

Bei diesem Ausführungsbeispiel kann weiterhin vorgesehen sein,
- dass die Stellklappe eine erste vordere Luftausblas-Öffnung und zumindest eine zweite hintere Luftausblas-Öffnung aufweist, wobei die zweite hintere Luftausblas-Öffnung in der Strömungsrichtung gesehen hinter der ersten vorderen Luftausblas-Öffnung und in dem vorderen sich von 3 % bis 15 % der Klappentiefe erstreckenden Bereich Stellklappe gelegen ist.

Weiterhin kann bei diesen Ausführungsbeispielen vorgesehen sein,
- dass an der ersten Ausblasöffnung und an zumindest einer zweiten Ausblasöffnung der Stellklappe eine Öffnungveränderungs-Vorrichtung zum Öffnen und Schließen der jeweiligen Ausblasöffnung angeordnet ist,
- dass die Ansteuerungsvorrichtung mit den Öffnungveränderungs-Vorrichtungen zur Steuerung der jeweiligen Öffnungveränderungs-Vorrichtung funktional in Verbindung steht und von dieser als Eingangsgröße den Verstellzustand der Stellklappe empfängt und die eine mit dem jeweiligen Aktuator funktional in Verbindung stehende Ansteuerfunktion zur Erzeugung eines Kommandosignals zur Steuerung des Aktuators aufweist, die aus dem Verstellzustand der Stellklappe ein entsprechendes Signal zum Öffnen und Schließen der zumindest einen Ausblasöffnung und/oder der zumindest einen Auslassöffnung erzeugt und an den Aktuator übermittelt.

Die Steuerungsvorrichtung kann derart ausgeführt sein, dass diese zur Einstellung eines Verstellzustands der Stellklppen aufgrund von Steuerungskommandos bei der Kommandierung von Verstellzuständen von Stellklappen den Durchsatz des Strömungsförderantriebs und den Zustand der den Luftausblas-Öffnungen zugeordneten Öffnungveränderungs-Vorrichtungen einstellt, wobei
- bei der Kommandierung eines ersten Verstellbereichs von Stellklappen für die erste vordere Luftausblas-Öffnung durch Ansteuerung der dieser zugeordneten Öffnungveränderungs-Vorrichtung einen geschlossenen Zustand vorsieht und
- bei der Kommandierung eines zweiten Verstellbereichs von Stellklappen für die erste vordere Luftausblas-Öffnung durch Ansteuerung der dieser zugeordneten Öffnungveränderungs-Vorrichtung einen offenen Zustand vorsieht,

Dabei kann vorgesehen sein, dass bei der Kommandierung eines zweiten Verstellbereichs von Stellklappen für die erste vordere Luftausblas-Öffnung durch Ansteuerung der dieser zugeordneten Öffnungveränderungs-Vorrichtung einen offenen Zustand vorsieht und zumindest in Zeitabschnitten gleichzeitig die zweite Luftausblas-Öffnung durch Ansteuerung der dieser zugeordneten Öffnungsveränderungs-Vorrichtung einen geschlossenen Zustand vorsieht. Auch kann dabei vorgesehen sein, dass bei dem zweiten Verstellbereich die Stellklappe weiter ausgefahren ist als bei dem ersten Verstellbereich der Stellklappe.

Bei einer Ausführungsform des erfindungsgemäßen Flugzeugs können an den Seitenflächen der Stellklappe in der Klappentiefen-Richtung gesehen folgende Öffnungen vorgesehen sein:
- zumindest eine Luftausblas-Öffnung im in Strömungsrichtung gesehen vorderen und sich bis zu 15% der Klappentiefe erstreckenden Bereich der Stellklappe angeordnet ist und
- zumindest eine Lufteinlass-Öffnung, die auf der Oberseite der Stellklappe und im in Strömungsrichtung gesehen hinteren sich zwischen 30 % und 90 % der Klappentiefe erstreckenden Bereich der Stellklappe und/oder auf der Oberseite der Stellklappe im von 90 % bis 100 % der Klappentiefe erstreckenden Hinterkantenbereich und/oder auf der Unterseite der Stellklappe im von 90 % bis 100 % der Klappentiefe erstreckenden Hinterkantenbereich der Stellklappe angeordnet ist.

Die Steuerungsvorrichtung mit einer Klappen-Ansteuerfunktion kann zur Einstellung der Stellklappen eine Ansteuerungsvorrichtung zur Steuerung des Strömungsförderantriebs aufweisen. Alternativ oder zusätzlich kann die Steuerungsvorrichtung mit einer Klappen-Ansteuerfunktion zur Einstellung der Stellklappen eine Regelungsvorrichtung zur Steuerung des Strömungsförderantriebs aufweisen.

Bei den erfindungsgemäßen Ausführungsformen kann insbesondere vorgesehen sein, dass der zwischen dem Hauptflügel und der Stellklappe ausgebildete Spalt derart gestaltet ist, dass dieser nicht aerodynamisch wirksam ist.

Die Sensorvorrichtung kann einen oder mehrere Sensoren zur Erfassung des Strömungszustands auf der Oberseite der Hochauftriebsklappe anliegenden oder abgelösten Strömung aufweisen. Dabei kann der Sensor oder mehrere Sensoren zur Erfassung der Strömungsgeschwindigkeit ein Hitzdrahtsensor sein. Weiterhin kann der Sensor oder mehrere Sensoren ein Piezo-Wandschubspannungssensor zur Erfassung der Wandschubspannung sein. Dabei kann der Sensor oder mehrere Sensoren zur Erfassung der Wandschubspannung ein Heißfilmsensor sein.

Der oder mehrere Sensoren kann/können generell ein Sensor zur Erfassung der Eigenschaften der Strömungszustandes auf der Oberseite der Klappe sein, der derart ausgeführt ist, dass durch das von dem Sensor erzeugte Signal eindeutig der Strömungszustand ermittelt werden kann, d.h. dass festgestellt werden kann, ob eine anliegende oder abgelöste Strömung vorliegt, detektiert bzw. erfassen kann.

Die Pumpe und/oder die Ansteuerungsvorrichtung kann bzw. können in der Hochauftriebsklappe angeordnet sein.

Im Folgenden werden Ausführungsbeispiele der Erfindung an Hand der beigefügten Figuren beschrieben, die zeigen:

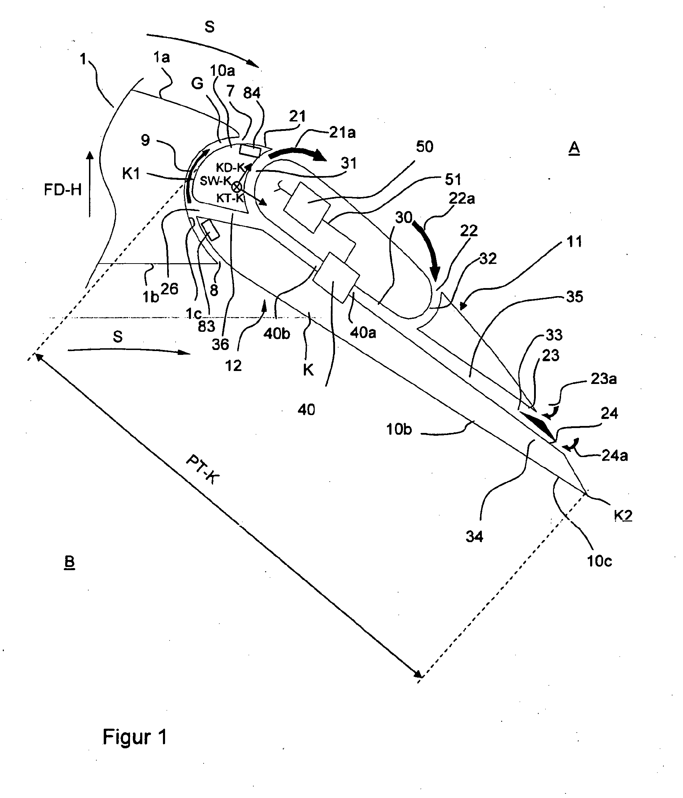

- Figur 1 eine schematische Darstellung einer ersten Ausführungsform einer Stellklappe nach der Erfindung wie z.B. eines Flügels oder einer Hochauftriebsklappe, die mehrere Einlassöffnungen, zwei Ausblasöffnungen, diese verbindende Luftleitungen sowie einen Strömungsförderantrieb zur Beeinflussung der Strömung innerhalb der Luftleitungen, durch den sich der Luftstrom an verschiedenen auf aktive Weise bildet, aufweist,

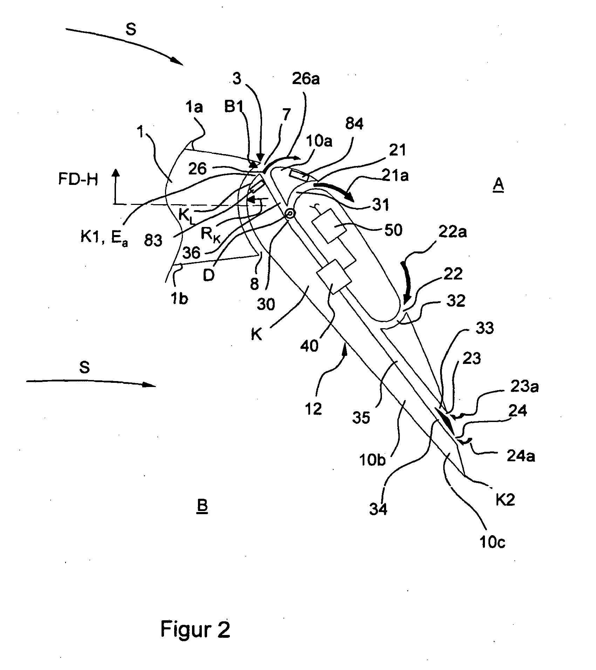

- Figur 2 die erste Ausführungsform einer Stellklappe nach der Figur 1 in einer weit oder vollständig ausgefahrenen Stellung, die eine Landestellung sein kann,

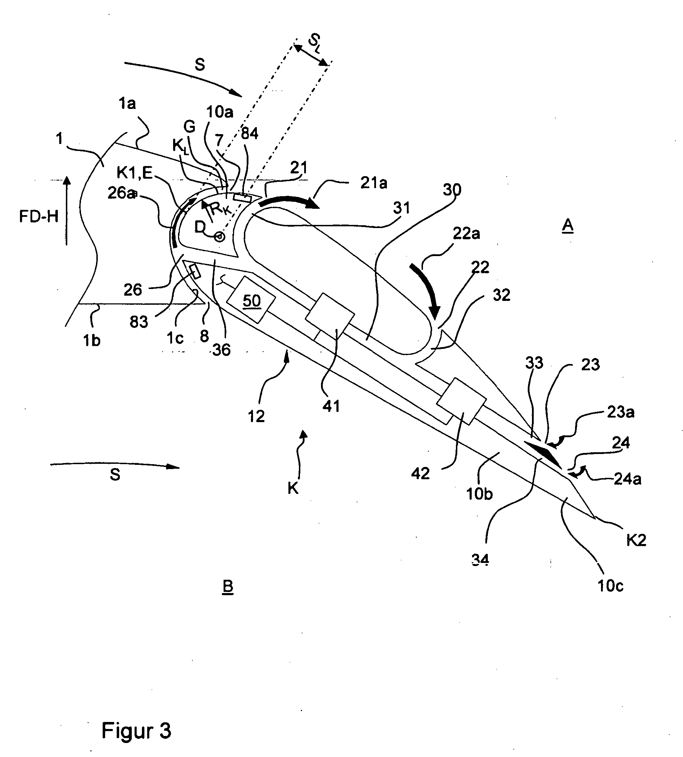

- Figur 3 die erste Ausführungsform der Stellklappe nach der Figur 1, bei der im Gegensatz zur Darstellung der Figur 1 zwei Strömungsförderantriebe in die Luftleitungen integriert sind,

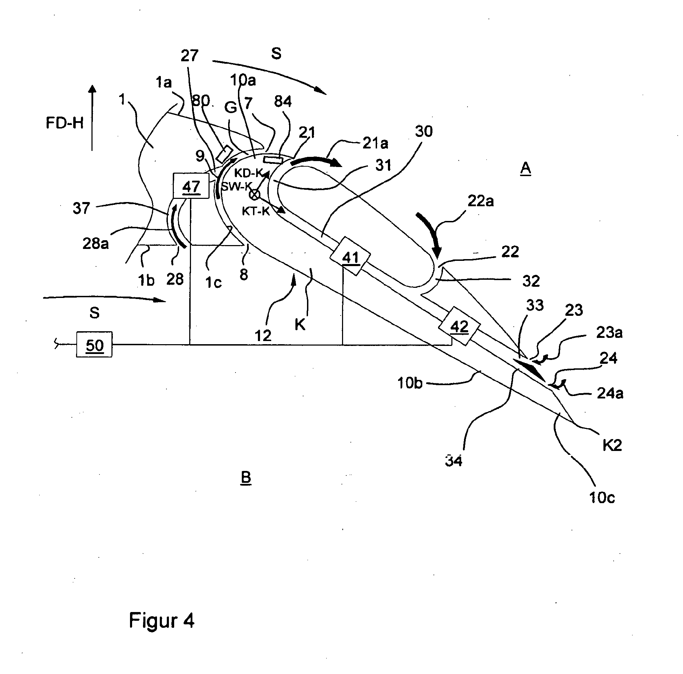

- Figur 4 eine schematische Darstellung eines Ausführungsbeispiels einer Anordnung eines Flügels oder einer Stellklappe und insbesondere einer Hochauftriebsklappe mit einer Vorrichtung zur Strömungsbeeinflussung an derselben, wobei die Stellklappe eine Ausblasöffnung und mehrere Einlassöffnungen diese verbindende Luftleitungen sowie einen Strömungsförderantrieb zur Beeinflussung der Strömung innerhalb der Luftleitungen aufweist, wobei der Hauptflügel eine Einlassöffnung auf dessen Unterseite oder Druckseite sowie eine Ausblasöffnung im Bereich zwischen dem Hauptflügel und der Hochauftriebsklappe, einen die Öffnungen verbindenden Kanal und einen Strömungsförderantrieb zur Beeinflussung der Strömung innerhalb dieses Kanals aufweist,

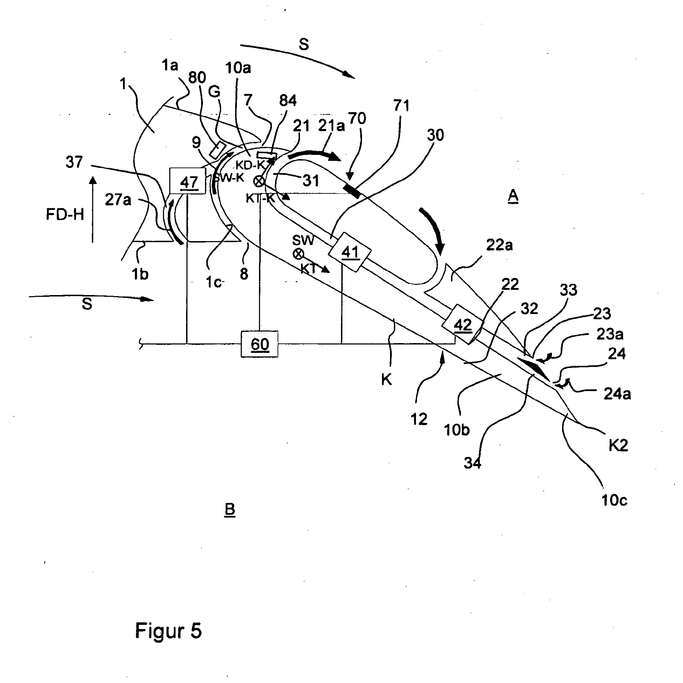

- Figur 5 eine schematische Darstellung einer weiteren erfindungsgemäßen Ausführungsform einer Anordnung eines Flügels oder einer Stellklappe wie einer Hochauftriebsklappe mit einer Vorrichtung zur Strömungsbeeinflussung an derselben nach der Figur 4, wobei gegenüber der Figur 4 die Leistungen der Strömungsförderantriebe aufgrund der Sensorwerte einer Sensorvorrichtung mittels einer Regelungsvorrichtung geregelt werden,

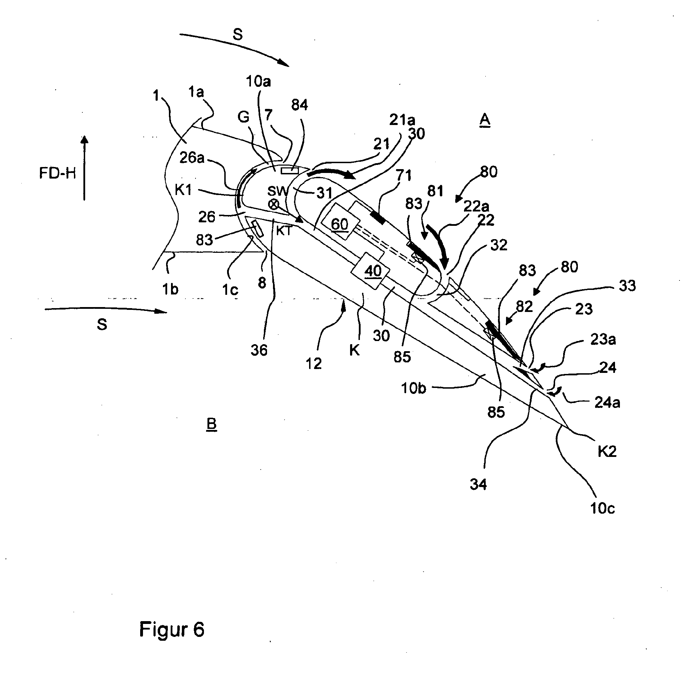

- Figur 6 eine schematische Darstellung einer weiteren erfindungsgemäßen Ausführungsform einer Anordnung eines Flügels mit einer Stellklappe wie einer Hochauftriebsklappe mit einer Vorrichtung zur Strömungsbeeinflussung an derselben, bei der sich der Luftstrom aufgrund von zwei Ausblasöffnungen im vorderen Bereich der Stellklappe und von mehreren Einlassöffnungen sowie diesen verbindenden Kanälen auf aktive Weise mittels einer geregelten Pumpe und geregelter Öffnungs- und Schließvorrichtungen an den Ausblasöffnungen und an den Einlassöffnungen bildet, und

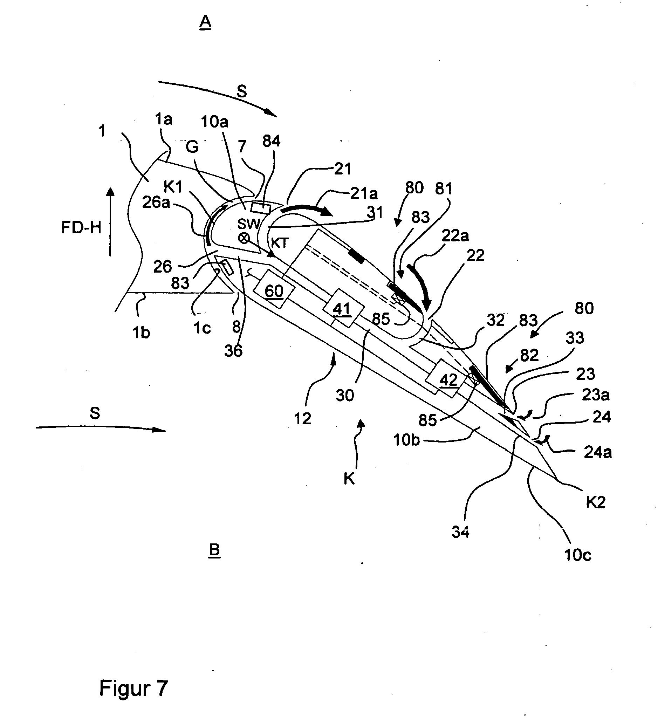

- Figur 7 eine schematische Darstellung einer weiteren erfindungsgemäßen Ausführungsform einer Anordnung eines Flügels oder einer Stellklappe mit einer Vorrichtung zur Strömungsbeeinflussung an derselben, bei der sich der Luftstrom an verschiedenen Ausblasöffnungen und an mehreren Einlassöffnungen sowie in diesen verbindenden Kanälen auf aktive Weise mittels mehrerer geregelter Pumpen und geregelter Öffnungs- und Schließvorrichtungen an den Ausblasöffnungen und an den Ausblasöffnungen bildet.

Die Erfindung wird im Folgenden beschrieben an Hand einer Hochauftriebsklappe. Jedoch ist die Erfindung generell anwendbar auf einen aerodynamischen Körper, der beim Flugzeug ein Flügel und insbesondere ein Hauptflügel, ein Vorflügel oder eine Vorderkanten-Klappe, ein Seitenleitwerk oder ein Seitenruder oder eine Höhenflosse oder ein Höhenruder sein kann. Die Stellklappe kann mittels einer Gelenkanordnung an dem Hauptflügel angelenkt sein. Die Gelenkanordnung kann insbesondere eine Dropped-Hinge-Kinematik oder eine Track-Kinematik aufweisen.

In den Figuren sind verschiedene Ausführungsbeispiele der Erfindung dargestellt. Die Figuren zeigen jeweils eine Hochauftriebsklappe 10, die an einem Hauptflügel 1 angekoppelt ist. Erfindungsgemäß könnend die für eine Stellklappe oder eine Hochauftriebsklappe vorgesehenen Merkmale generell für einen aerodynamischen Körper vorgesehen sein, auf den die an Hand der hierin für eine Hochauftriebsklappe beschriebenen Merkmale direkt oder analog zu übertragen sind. Der erfindungsgemäß vorgesehene aerodynamische Körper kann insbesondere auch ein Hauptflügel 1 sein. Der Hauptflügel 1 weist eine an der Saugseite A desselben verlaufende Oberseite 1a, eine an der Druckseite B der derselben verlaufende Unterseite 1b und eine rückseitige, der Hochauftriebsklappe K zugewandte Oberfläche 1c auf. Für die Hochauftriebsklappe oder generell für die Stellklappe oder den aerodynamischen Körper ist eine Klappentiefen-Richtung KT-K bzw. generell Tiefenrichtung, eine Spannweiten-Richtung SW-K bzw. generell Spannweitenrichtung und eine Klappendicken-Richtung KD-K bzw. generell Klappendickenrichtung definiert. Die Stellklappe oder Hochauftriebsklappe K weist eine an der Saugseite A der Hochauftriebsklappe K verlaufende Oberseite 11 und eine an der Druckseite B der Hochauftriebsklappe K verlaufende Unterseite 12 auf. Erfindungsgemäß ist oder sind an der Oberseite 11 der Hochauftriebsklappe K zumindest eine Luftausblas-Öffnung und/oder zumindest eine Lufteinlass-Öffnung vorgesehen.

Bei den Darstellungen der Figuren 1 bis 7 befindet sich zwischen dem Hauptflügel 1 und der Hochauftriebsklappe ein Spalt G mit einem oberen, zwischen der Saugseite oder der Oberseite 1a des Hauptflügels 1 und der Saugseite 11 der Hochauftriebsklappe K gelegenen ersten Ende 7 und mit einem unteren, zwischen der Druckseite oder der Unterseite 1b des Hauptflügels 1 und der Druckseite 12 der Hochauftriebsklappe K gelegenen zweiten Ende 8. Bei dem Vorhandensein eines aerodynamisch wirksamen Spalts G zwischen dem Hauptflügel und der Stellklappe K und bei einer bestimmungsgemäßen Umströmung des Hauptflügels 1 und der Hochauftriebsklappe K strömt Luft von der Saugseite B bzw. dem zweiten Ende 8 des Spalts G zur Druckseite A bzw. dem ersten Ende 8 des Spalts G (Pfeil 9).

Dieser Spalt G muss efindungsgemäß jedoch nicht vorliegen. Ausführungsbeispiele der Erfindung können auch auf eine Kombination eines Hauptflügels und einer Stellklappe gereichtet sein, bei der kein aerodynamisch wirksamer Spalt G zwischen dem Hauptflügel und der Stellklappe K vorliegt. Bei einer solchen "spaltfreien Stellklappe" ist zwar ein geringer Spalt oder Abstand zwischen dem Hauptflügel und der Stellklappe K gegeben, allerdings ist die Größe des Spalts G bzw. des Abstands so gering, dass die darin befindliche Luft keinen aerodynamisch wirksamen Einfluss auf die Umströmung von Hauptflügel und Stellklappe hat. Diese Ausführungsbeispiele können insbesondere mit einer sogenannten Coanda-Klappe vorgesehen sein.

Bei den in den Figuren 1 bis 7 dargestellten Hochauftriebsklappen ist zumindest eine Luftauslass-Öffnung 21, 26 in dem in der Strömungsrichtung S gesehen vorderen Bereich 10a der Hochauftriebsklappe K und sind insgesamt drei Lufteinlass-Öffnungen 22, 23, 24 in dem in Strömungsrichtung S gesehen hinteren Bereich 10b der Hochauftriebsklappe K angeordnet. Bei den in den Figuren 1, 3, 6 und 7 dargestellten Ausführungsbeispielen der Hochauftriebsklappe K sind im vorderen und sich bis zu 15% der Klappentiefe KT erstreckenden Bereich 10a der Hochauftriebsklappe K zwei Luftauslass-Öffnungen 21, 26 angeordnet. Bei den in den Figuren 1 bis 7 dargestellten Hochauftriebsklappen ist eine Lufteinlass-Öffnung 24 im Hinterkanten-Bereich 10c der Hochauftriebsklappe K angeordnet. Alternativ können mehrere Lufteinlass-Öffnungen im vorderen Bereich 10a der Hochauftriebsklappe K und/oder kann auch nur eine Luftausblas-Öffnung im hinteren Bereich 10b der Hochauftriebsklappe K und/oder können auch mehrere Luftausblas-Öffnungen im Hinterkantenbereich 10c der Hochauftriebsklappe K angeordnet sein. Bei den Ausführungsformen der Hochauftriebsklappe 10, die in der Figuren 1, 2, 3, 7, 8 und 9 dargestellt sind, sind zwei Ausblasöffnungen 21, 25 am vorderen und sich bis zu 15% der Klappentiefe KT erstreckenden Bereich 10a der Hochauftriebsklappe K angeordnet.

Erfindungsgemäß ist vorgesehen,
- dass die zumindest eine Luftauslass-Öffnung im in Strömungsrichtung S gesehen vorderen und sich bis zu 15% der Klappentiefe KT erstreckenden Bereich 10a angeordnet ist, und/oder
- dass zumindest eine Lufteinlass-Öffnung 23 im in Strömungsrichtung S gesehen hinteren und sich zwischen 30 % und 80 % der Klappentiefe KT erstreckenden Bereich 10b angeordnet ist, und/oder
- dass zumindest eine Lufteinlassöffnung 24 im in Strömungsrichtung S gesehen hinter dem hinteren Bereich 10b gelegenen Hinterkantenbereich 10c der Hochauftriebsklappe K von 90 bis 100% auf der Oberseite und / oder auf der Unterseite angeordnet ist.

Unter Hinterkantenbereich 10c der Hochauftriebsklappe K wird in diesem Zusammenhang derjenige Bereich der Hochauftriebsklappe K verstanden, der in Strömungsrichtung S gesehen hinter dem hinteren Bereich 10b und am Ende der Hochauftriebsklappe K gelegen ist.

Erfindungsgemäß kann also auch nur eine Einlassöffnung 22, 23, 24 am hinteren Bereich 10b oder am Hinterkantenbereich 10c der Hochauftriebsklappe 10 angeordnet sein. In den Figuren 1 bis 7 sind jeweils zwei Einlassöffnungen 22, 23 im hinteren Klappenbereich 10b und eine Einlassöffnung 24 im Hinterkantenbereich 10c angeordnet. An den Einlassöffnungen 22, 23, 24 schließt sich jeweils ein im Inneren der Hochauftriebsklappe befindlicher Kanal 32, 33 bzw. 34 an, die jeweils in einen Verbindungskanal 30 münden. Die Kanäle 32, 33 bzw. 34 sind über den Verbindungskanal 30 mit zumindest einem Auslasskanal 31, 36 verbunden, der an der Oberfläche des vorderen Bereichs 10a der Hochauftriebsklappe 10 ausmündet. Die mit den Einlassöffnungen 22, 23, 24 verbundenen Kanäle 32, 33 bzw. 34 oder der zumindest eine mit der zumindest einen Einlassöffnung verbundene Kanal kann bzw. können auch direkt mit der zumindest einen Ausblasöffnung 21, 26 verbunden sein. In den Figuren 1 bis 7 sind die bei der Umströmung des Hauptflügels 1 und der Hochauftriebsklappe mit der Strömung S entstehenden Einlassströmungen mit den Pfeilen 22a, 23a bzw. 24a dargestellt. In den Figuren 1, 3, 6, und 7 sind Ausführungsformen der erfindungsgemäßen Hochauftriebsklappe K mit zwei Ausblasöffnungen 21, 26 dargestellt, wobei die bei der Umströmung des Hauptflügels 1 und der Hochauftriebsklappe mit der Strömung S entstehenden Auslassströmungen mit den Pfeilen 21a bzw. 26a dargestellt sind. Jede Ausblasöffnung 21, 26 steht mit jeweils einem Ausblaskanal 21 bzw. 36 in Verbindung, die wiederum mit einem zentralen Verbindungskanal 30 und über diesen mit den Einlassöffnungen in Verbindung stehen können. Dabei kann der zentrale Verbindungskanal 30 entfallen und eine direkte Verbindung zwischen einer oder mehreren Ausblasöffnungen bzw. zumindest einem Ausblaskanal und jeweils zumindest einer Einlassöffnung bzw. dem jeweils zugehörigen Einlasskanal vorgesehen sein. Auch kann jeweils eine Ausblasöffnung mit einer Einlassöffnung in Verbindung stehen.

Weiterhin ist nach der Erfindung vorgesehen, dass in zumindest einem der Kanäle der Stellklappe oder des aerodynamischen Körpers ein Strömungsförderantrieb 40, 41, 42 insbesondere in Form einer Pumpe 40 wirksam ist, um die in dem einen Kanal oder in mehreren Kanälen befindliche Luft in einer vorbestimmten Richtung anzutreiben und um dadurch in zumindest einem Kanal einen Luftstrom in vorbestimmter Weise nach Art und Größe einzustellen. Der Strömungsförderantrieb 40, 41, 42 ist dazu in den jeweiligen Kanal integriert oder installiert. Der Strömungsförderantrieb 40, 41, 42 kann dabei im zentralen Verbindungskanal 30 und/oder einem des zumindest einen Einlasskanals oder einem des zumindest einen Ausblaskanals 32, 33 bzw. 34 installiert oder integriert sein. Dabei können auch mehrere Strömungsförderantriebe in eine oder mehrere Leitungen des aerodynamischen Körpers integriert sein. Die Leitung, in die der Strömungsförderantrieb oder der Pumpe weist eine Einlass 40a und einen Auslass 40b auf. Der Strömungsförderantrieb kann mit einer fest eingestellten Leistung arbeiten oder dieser kann derart ausgeführt sein, dass mit diesem aufgrund einer entsprechenden Ansteuerung durch eine Ansteuerungsfunktion der Einlassdruck und/oder der Ausblasdruck und/oder der Differenzdruck verändert oder gesteuert wird.

Bei einem in der Figur 3 dargestellten Ausführungsbeispiel des erfindungsgemäßen aerodynamischen Körpers ist dieser derart gestaltet, dass eine Ausblasöffnung 26 in dem Bereich B1 der Oberfläche des vorderen Bereichs 10a der Hochauftriebsklappe K ausmündet, der dadurch definiert ist, dass in diesem der Krümmungsradius R_{K} der Konturlinie K_{L} des vorderen Bereichs 10a der Hochauftriebsklappe K bei dem sich quer zur Spannweitenrichtung SW-K ergebenden Querschnitt der Hochauftriebsklappe K einen Wert von 3% bis 12% der Profiltiefe der Klappe hat. Generell kann als der Querschnitt genommen werden, der sich quer zur Spannweitenrichtung und insbesondere senkrecht zur Spannweitenrichtung erstreckt. Alternativ kann derjenige relevante Querschnitt verwendet werden, der sich in der Flugzeugslängsrichtung des Flugzeugs erstreckt, an dem der Flügel mit der erfindungsgemäßen Hochauftriebsklappe K angebracht oder für den der Flügel vorgesehen ist. Auch kann der derjenige Querschnitt maßgebend sein, in dem die betreffende Ausblasöffnung 26 und die zumindest eine Ausblasöffnung 22, 23, 24 gelegen ist. Weiterhin kann derjenige Querschnitt verwendet werden, der senkrecht zur Spannweitenrichtung SW-K des aerodynamischen Körpers bzw. der Stellklappe verläuft und in der die Klappentiefenrichtung KT-K enthalten ist, wie dies in den Figuren dargestellt ist. Bei diesem Ausführungsbeispiel kann in dem betreffenden Querschnitt oder kann die Hochauftriebsklappe K nur diese eine Ausblasöffnung 26 oder aber auch eine oder mehrere weitere Ausblasöffnungen 21 enthalten.

Erfindungsgemäß kann bei den Ausführungsformen der Stellklappe alternativ oder zusätzlich die Lage zumindest einer Ausblasöffnung 26 über die Winkelstellung der Stellklappe oder der Hochauftriebsklappe K definiert sein. Danach ist zumindest eine Ausblasöffnung 26 in einem Bereich B1 der der Konturlinie K_{L} des vorderen Bereichs 10a der Hochauftriebsklappe K gelegen, der bei einer bestimmten, maximalen Stellung der Stellklappe bzw. der Hochauftriebsklappe K in der Flügeldickenrichtung FD-H des Hauptflügels 1 gesehen unterhalb der hinteren oberen Kante 3 des Hauptflügels 1 gelegen ist. Die maximale Stellung kann bei einer Hochauftriebsklappe insbesondere in dem Bereich zwischen 50 und 70 Grad liegen. Der Bereich kann sich dabei insbesondere von dem Ort der Nase der Klappe bis 15% der Klappentiefe erstrecken.

In den Fällen der Definition des Ortes zumindest einer Ausblasöffnung 26, also bei der Definition mittels des Krümmungsradius R_{K} der Konturlinie K_{L} des vorderen Bereichs 10a der Stellklappe oder der Hochauftriebsklappe K und bei der Definition mittels der Stellung der Hochauftriebsklappe K für eine bestimmte Stellung, z.B. Landestellung ist der vordere Bereich 10a insbesondere dadurch definiert, dass sich dieser von dem in der Klappentiefe KT-K gesehen vordersten und der Strömung zugewandten Punkt in Richtung zum hintersten Ende der Klappe bis zu dem Ort erstreckt, der bei 15% der Klappentiefe KT-K gelegen ist.

Bei dem in der Figur 2 dargestellten Ausführungsbeispiel eines Hochauftriebsklappen-Querschnitts, der dort in seiner maximal ausgefahrenen Stellung gezeigt ist, ist sowohl die Definition mittels des Krümmungsradius R_{K} der Konturlinie K_{L} als auch die Definition mittels der Stellung der Hochauftriebsklappe K in einer bestimmten, maximalen Stellung der Klappe erfüllt. Dies muss aber nicht notwendigerweise der Fall sein, so dass beide Definitionsweisen des Bereichs für die Lage einer Ausblasöffnung für sich eigenständig sind und erfindungsgemäß als zwei Alternativen für die Bestimmung der Lage zumindest einer Ausblasöffnung angesehen werden.

Insbesondere bei diesen Alternativen kann vorgesehen sein, dass nur diese eine Ausblasöffnung 26 im vorderen Bereich der Hochauftriebsklappe K vorgesehen ist.

Durch das Vorsehen der zumindest einen Ausblasöffnung 21, 26 und den zumindest einen Strömungsförderantrieb wird ein kontinuierliches Ausströmen (Pfeile 21a bzw. 26a) von zusätzlichem Fluid in die Grenzschichtströmung im Vorderkantenbereich der Klappe K in effektiver und effizienter Weise produziert, um die Strömung derart mit Bewegungsimpuls anzureichern, dass sie befähigt ist gegen den Druckanstieg in Strömungsrichtung, hervorgerufen durch die insbesondere stark gekrümmte Kontur der Klappe K auf der Oberseite 11, anzugehen, um dadurch auf der Klappenoberseite die Grenzschichtströmung an der Oberseite 11 anliegend zu halten. Das Einströmen von die Hochauftriebsklappe K umströmender Luft in die Lufteinlassöffnung 22, 23 bzw. 24 ist schematisch mit Pfeilen 22a, 23a bzw. 24a dargestellt.

Der Verlauf der Konturlinie K_{L} des vorderen Bereichs 10a K der Querschnittskontur des aerodynamischen Körpers oder der Hochauftriebklappe K oder der Verlauf der Oberseite 11 des aerodynamischen Körpers oder der Hochauftriebsklappe K in der Tiefenrichtung bzw. der Klappentiefenrichtung KT-K gesehen kann derart vorgesehen sein, dass sich der Krümmungsradius R_{K} der Konturlinie K_{L} des vorderen Bereichs 10a des aerodynamischen Körpers oder der Hochauftriebsklappe K entlang der Oberseite 11 in Strömungsrichtung S oder in Tiefenrichtung bzw. Klappentiefenrichtung KT-K gesehen sich von einem Krümmungsradius, der den Betrag von 3% der Profiltiefe des aerodynamischen Körpers oder der Hochauftriebsklappe K hat, kontinuierlich steigend zu einem Krümmungsradius verändert, der den Betrag von günstigerweise 12% der Profiltiefe des aerodynamischen Körpers oder der Hochauftriebsklappe K hat. Nach einem Ausführungsbeispiel der Erfindung sind sämtliche Ausblasöffnungen 21, 26 des aerodynamischen Körpers oder der Hochauftriebklappe K in der Klappentiefe KT gesehen in diesem Bereich der Konturlinie K_{L} gelegen. Diese Maßgabe kann für einzelne oder für alle Ausführungsbeispiele der Erfindung vorgesehen sein.

Die Luftauslass-Öffnungen können in Spannweitenrichtung SW-K und insbesondere im bis zu 15% der Klappentiefe KT erstreckenden Bereich nebeneinander angeordnet sein. Alternativ oder zusätzlich können mehrere Lufteinlass-Öffnungen in Spannweitenrichtung des aerodynamischen Körpers oder der Klappe SW-K und insbesondere im sich zwischen 30 % und 90 % der Klappentiefe KT erstreckenden Bereich nebeneinander angeordnet sein. Alternativ oder zusätzlich zu diesen Einlassöffnungen können im Hinterkantenbereich weitere Lufteinlassöffnungen im Bereich von 90% bis 100% der Klappentiefe auf der Oberseite und / oder auf der Unterseite des aerodynamischen Körpers oder der Klappe angeordnet sein. Entsprechend der Anordnung einer Mehrzahl von Öffnungen in Spannweitenrichtung können die erfindungsgemäß erreichbaren aerodynamischen Wirkungen in vorbestimmter Weise über die Spannweitenrichtung SW-K verteilt oder erreicht werden. Insbesondere können in der Spannweitenrichtung des aerodynamischen Körpers oder der Stellklappe K gesehen hintereinander zueinander unterschiedliche Konfigurationen zumindest einer Einlassöffnung und zumindest einer Ausblasöffnung angeordnet sein. Dabei kann vorgesehen sein, dass nur teilweise erfindungsgemäße Konfigurationen von zumindest einer Einlassöffnung und zumindest einer Ausblasöffnung realisiert sind.

Wie in den Figuren 1 bis 7 gezeigt ist, sind die Einlassöffnungen 22, 23, 24 oder die zumindest eine Einlassöffnung über Luftleitungskanäle mit der zumindest einen Ausblasöffnung, 21, 26 verbunden. In den Figuren 1 bis 7 sind Ausführungsbeispiele der Hochauftriebsklappe K dargestellt, bei denen die Einlassöffnungen 22, 23, 24 jeweils die Enden oder Ausmündungen von Luftleitungskanälen oder von Kanälen 32, 33 bzw. 34 und diese wiederum in einen Verbindungskanal 30 münden, der wiederum in Kanäle 31, 36 mündet, die jeweils in einer Ausblasöffnungen 21 bzw. 26 an der Oberfläche der Oberseite 11 der Hochauftriebsklappe K münden. Nach einem anderen Ausführungsbeispiel sind zumindest eine Einlassöffnung mit zumindest einer Ausblasöffnung und zumindest eine weitere Einlassöffnung mit zumindest einer weiteren Ausblasöffnung verbunden. Der Luftstrom an verschiedenen Einlassöffnungen und an zumindest einer Ausblasöffnung 21, 26 wird auf aktive Weise von der Leistung zumindest eines von einer Ansteuerungsvorrichtung 50 angesteuerten Strömungsförderantriebs 40 auf aktive Weise beeinflusst. Die Ansteuerungsvorrichtung 50 ist über eine Signal- oder Datenleitung 51 mit dem zumindest einen Strömungsförderantrieb 40 funktional verbunden, wobei die Ansteuerungsvorrichtung 50 innerhalb der Hochauftriebsklappe K oder innerhalb des Hauptflügels 1 installiert sein kann. Auch kann die Ansteuerungsvorrichtung 50 im Rumpf des Flugzeugs installiert oder funktional in einem Zentralcomputer, wie z.B. der Flugsteuerungsvorrichtung integriert sein.

Erfindungsgemäß ist also auch eine Anordnung einer Stellklappe K wie einer Hochauftriebsklappe oder eines Seitenruders mit einer Vorrichtung zur Strömungsbeeinflussung an derselben vorgesehen. Die Stellklappe K ist mit einem Strömungsförderantrieb 40, 41, 42 nach einem der erfindungsgemäßen Ausführungsformen gebildet. Die Vorrichtung zur Strömungsbeeinflussung weist auf:
- eine mit der Stellklappen-Verstellvorrichtung funktional in Verbindung stehende Ansteuerungsvorrichtung 50 zur Steuerung des Strömungsförderantriebs 40, 41, 42, wobei die Ansteuerungsvorrichtung 50 von einer Stellklappen-Verstellvorrichtung als Eingangsgröße den Verstellzustand der Stellklappe K empfängt, und
- eine mit dem Strömungsförderantrieb 40, 41, 42 funktional in Verbindung stehende Ansteuerfunktion zur Erzeugung eines Kommandosignals zur Steuerung des Durchsatzes des Strömungsförderantriebs 40, 41, 42 aufweist, die aus dem Verstellzustand der Stellklappe K ein entsprechendes Steuerungssignal zur Ansteuerung der Strömungsförderantrieb 40, 41, 42 erzeugt.

Bei den in den Figuren 1 bis 4 dargestellten Ausführungsbeispielen einer solchen Anordnung einer Stellklappe K oder Hochauftriebsklappe 10 mit einer Vorrichtung zur Strömungsbeeinflussung ist vorgesehen, dass die Vorrichtung zur Strömungsbeeinflussung einen Strömungsförderantrieb oder eine Pumpe 40 aufweist, dessen bzw. deren Einlassleitung 40a mit zumindest einer Einlassöffnung 22, 23, 24 an der Stellklappe K oder der Hochauftriebsklappe 10 und deren Auslassleitung 40b mit zumindest einer Ausblasöffnung 21 an der Hochauftriebsklappe 10 in Verbindung steht. Im dargestellten Ausführungsbeispiel sind drei Einlassöffnungen 22, 23, 24 mit der Einlassleitung 40a der Pumpe 40 und eine Ausblasöffnung 21 (Figuren 2 und 4) oder zwei Ausblasöffnungen 21, 26 (Figuren 1 und 3) mit der Auslassleitung 40b der Pumpe 40 verbunden. Weiterhin ist eine mit der Hochauftriebsklappen-Verstellvorrichtung (nicht dargestellt) funktional in Verbindung stehende Ansteuerungsvorrichtung 50 zur Steuerung des Pumpen-Auslassdruckes und/oder des Pumpen-Einlassdruckes und/oder des Pumpen-Differenzdruckes als Vorrichtung zur Strömungsbeeinflussung vorgesehen. Die Ansteuerungsvorrichtung 50 weist eine Empfangsvorrichtung auf, über die von der Hochauftriebsklappen-Verstellvorrichtung als Eingangsgröße der Verstellzustand der Stellklappe K oder der Hochauftriebsklappe 10 empfangen werden kann. Weiterhin weist die Ansteuerungsvorrichtung 50 eine mit der Pumpe 40 funktional in Verbindung stehende Ansteuerfunktion zur Erzeugung eines Steuer- oder Kommandosignals zur Steuerung des Pumpen-Auslassdruckes und/oder des Pumpen-Einlassdruckes und/oder des Pumpen-Differenzdruckes auf. Die Ansteuerfunktion erzeugt oder ermittelt das Steuer- oder Kommandosignal aufgrund der von der Hochauftriebsklappen-Verstellvorrichtung empfangenen Eingangsgröße bzw. des Verstellzustands der Hochauftriebsklappe 10. Die Ansteuerungsvorrichtung 50 sendet das Steuer- oder Kommandosignal an die Pumpe oder ein Steuerteil der Pumpe 40, die bzw. das derart gestaltet ist, dass diese bzw. dieses daraufhin einen entsprechenden Pumpen-Auslassdruck und/oder des Pumpen-Einlassdruck und/oder des Pumpen-Differenzdruck einstellt und auf diese Weise die Umströmung der Hochauftriebsklappe in vorbestimmter Weise je nach deren Verstellzustand einstellt.

Dabei können auch mehrere Pumpen 41, 42 in den Luftleitungskanälen vorgesehen oder installiert sein, wie in der Figur 3 dargestellt ist. Bei dem in der Figur 3 dargestellten Ausführungsbeispiel sind zwei Pumpen, die beide von der Ansteuerungsvorrichtung 50 angesteuert werden, im zentralen Verbindungskanal 30 eingerichtet.

Nach einem weiteren in den Figuren 4 und 5 dargestellten Ausführungsbeispiel der Erfindung ist die Stellklappe K oder die Hochauftriebsklappe und/oder die Anordnung einer Stellklappe K bzw. Hochauftriebsklappe 10 mit einer Vorrichtung zur Strömungsbeeinflussung an derselben nach einem erfindungsgemäßen Ausführungsbeispiel gestaltet und zusätzlich im Hauptflügel 1 ein Kanal 37 vorgesehen, der von der Unterseite 1 b zur rückseitigen Oberfläche 1 c des Hauptflügels 1 verläuft. Dadurch ergibt sich im Kanal 37 eine Strömung, die in der Figur 5 mit dem Pfeil 28 dargestellt ist und die die im Spalt G von dem zweiten Ende 8 zu dem ersten Ende 9 gerichtete Strömung (Pfeil 9) verstärken kann. Dabei kann die Ausblasöffnung im vorderen Bereich 10a der Hochauftriebsklappe 10 an einer erfindungsgemäß vorgesehenen Stelle angeordnet sein.

Bei einem Ausführungsbeispiel ist keine Vorrichtung zur Strömungsbeeinflussung, also z.B. keine Pumpe zur Druckbeeinflussung in den Hochauftriebsklappen-Kanälen oder im Hauptflügel-Kanal 37 und auch keine Pumpe im Kanal 37 oder keine Öffnungs- oder Schließvorrichtung an Lufteinlässen vorgesehen, so dass sich der Luftstrom im Kanal 37 und auch in den Kanälen der Hochauftriebsklappe K auf passive Weise bildet.

Nach einem weiteren Ausführungsbeispiel ist in dem im Hauptflügel 1 angeordneten weiteren Kanal 37 eine von einer Ansteuerungsvorrichtung 50 angesteuerten Pumpe 47 installiert, mit der die Strömung im Kanal 37 und somit zwischen der Einlassöffnung 28 und der am Spalt G zwischen dem Hauptflügel 1 und der Hochauftriebsklappe 10 ausmündenden Ausblasöffnung 27 beeinflusst werden kann. Entsprechend der jeweiligen Ansteuerung durch die Ansteuerungsvorrichtung 50 kann durch die Pumpe 47 die im Spalt G von dem zweiten Ende 8 zu dem ersten Ende 9 gerichtete und bei der Umströmung des Hauptflügels 1 und der Hochauftriebsklappe mit der Strömung S entstehenden Strömung (Pfeil 9) verstärkt oder geschwächt werden. Zusätzlich können auch von einer Ansteuerungsvorrichtung 50 angesteuerte Pumpen zur Beeinflussung der Luftströmung in Luftleitungs-Kanälen der Hochauftriebsklappe 10 vorgesehen sein. Die Ansteuerungsvorrichtung 50 kann dabei dieselbe Ansteuerungsvorrichtung sein, mit der die Pumpen zur Beeinflussung der Luftströmung in Luftleitungs-Kanälen der Hochauftriebsklappe 10 angesteuert werden. Erfindungsgemäß kann insbesondere vorgesehen sein, dass die Ansteuerungsvorrichtung 50 ihre Inputs von einer Klappen-Verstellvorrichtung oder insbesondere einer Hochauftriebsklappen-Verstellvorrichtung empfängt.

Nach einem weiteren Ausführungsbeispiel nach der Erfindung ist eine Anordnung einer Stellklappe K mit einer Vorrichtung zur Strömungsbeeinflussung an derselben vorgesehen, die anstelle oder zusätzlich zu einem Strömungsförderantrieb aufweist:
- an zumindest einer Ausblasöffnung an der Stellklappe K und/oder an zumindest einer Einlassöffnung der Stellklappe K jeweils eine Öffnungveränderungs-Vorrichtung 80 zum Öffnen und Schließen der zumindest einen Ausblasöffnung und/oder der zumindest einen Einlassöffnung mit einer Öffnungveränderungs-Mechanik 83 und einen an diese angekoppelten Aktuator 81 zum Betätigen der jeweiligen Öffnungveränderung-Mechanik 83,
- die Ansteuerungsvorrichtung 50 zur Steuerung des Aktuators 81 der jeweiligen Öffnungveränderungs-Vorrichtung 80 mit der Klappen-Verstellvorrichtung funktional in Verbindung steht und von dieser als Eingangsgröße den Verstellzustand der Stellklappe K empfängt, wobei die Ansteuerungsvorrichtung 50 eine mit dem jeweiligen Aktuator 81 funktional in Verbindung stehende Ansteuerfunktion zur Erzeugung eines Kommandosignals zur Steuerung des Aktuators 81 aufweist, die aus dem Verstellzustand der Stellklappe K ein entsprechendes Signal zum Öffnen und Schließen der zumindest einen Ausblasöffnung und/oder der zumindest einen Auslassöffnung erzeugt und an den Aktuator 81 übermittelt.

Die Klappen-Verstellvorrichtung kann generell eine Steuerungsvorrichtung des Flugzeugssystems sein. Auch kann die Klappen-Verstellvorrichtung eine lokal an der Klappen-Verstellmechanik angeordnetes Steuerungsteil oder eine Sensorvorrichtung sein, die den jeweiligen Verstellzustand der Stellklappe erfasst oder z.B. an die Ansteuervorrichtung bzw. an eine optional vorgesehene Regelungsvorrichtung 60 weitergibt. Weiterhin kann vorgesehen sein, dass Strömungszustände in einem Kanal oder mehreren Kanälen in der Hochauftriebsklappe und/oder im Hauptflügel mittels eines entsprechenden Sensors erfasst und als Strömungswerte an die Hochauftriebsklappen-Verstellvorrichtung zur Kontrolle der Strömungszustände und zur Veränderung der Ansteuerung oder Regelung von Vorrichtungen zur Strömungsbeeinflussung weitergegeben werden.

Alternativ oder zusätzlich kann nach der Erfindung auch vorgesehen sein, dass der Pumpen-Auslassdruck und/oder der Pumpen-Einlassdruck und/oder der Pumpen-Differenzdruck der jeweils im Hauptflügel 1 und/oder in der Stellklappe K oder der Hochauftriebsklappe 10 angeordneten Pumpe durch eine Regelungsvorrichtung 60 eingestellt wird, wie dies in den Figuren 5 bis 7 dargestellt ist. Dabei weist die Vorrichtung zur Strömungsbeeinflussung auch eine Sensorvorrichtung 70 mit einem an der Oberseite 11 der Stellklappe K oder der Hochauftriebsklappe 10 angeordneten Sensor 71 zur Erfassung von aktuellen Strömungswerten an der Oberseite 11 der Stellklappe K oder der Hochauftriebsklappe 10 auf, die mit der Regelungsvorrichtung 60 funktional derart in Verbindung steht, dass diese Sensorsignale als Eingangssignale empfangen kann. Weiterhin weist die Regelungsvorrichtung 60 eine Regelungsfunktion zur Regelung eines vorgegebenen Strömungswertes auf der Oberseite 11 der Stellklappe K oder der Hochauftriebsklappe 10 auf. Die Regelungsfunktion steht funktional in Verbindung mit der Sensorvorrichtung 70 zum Empfang von aktuellen Strömungswerten und mit der Klappen-Verstellvorrichtung zum Empfang eines Wertes für den Verstellzustand der Stellklappe K oder der Hochauftriebsklappe 10. Weiterhin steht die Regelungsfunktion mit zumindest einer Pumpe funktional in Verbindung und erzeugt ein Steuersignal, das die Regelungsfunktion an die zumindest eine Pumpe zur Einstellung des Pumpen-Auslassdruckes und/oder des Pumpen-Einlassdruckes und/oder des Pumpen-Differenzdruckes sendet, um die Strömung an den jeweils zugeordneten Kanalauslässen und somit an der Saugseite A der Hochauftriebsklappe 10 zu beeinflussen.

Erfindungsgemäß kann auch eine Anordnung einer Stellklappe K mit einer Vorrichtung zur Strömungsbeeinflussung an derselben vorgesehen sein, wobei die Vorrichtung zur Strömungsbeeinflussung aufweist:
- an zumindest einer Ausblasöffnung an der Stellklappe K und/oder an zumindest einer Einlassöffnung der Stellklappe jeweils eine Öffnungveränderungs-Vorrichtung 80 zum Öffnen und Schließen der zumindest einen Ausblasöffnung und/oder der zumindest einen Einlassöffnung mit einer Öffnungveränderungs-Mechanik 83 und einen an diese angekoppelten Aktuator 81 zum Betätigen der jeweiligen Öffnungveränderungs-Mechanik 83,
- eine Sensorvorrichtung 70 mit zumindest einem an der Oberseite 11 der Stellklappe K angeordneten -Sensor 71 zur Erfassung von aktuellen Strömungswerten an der Oberseite 11 der Stellklappe K;
- eine Regelungsvorrichtung 60 mit einer Regelungsfunktion zur Regelung eines vorgegebenen Strömungswertes der Stellklappe K, die funktional in Verbindung steht mit: der Sensorvorrichtung 70 zum Empfang von aktuellen Strömungswerten von der Sensorvorrichtung 70, der Stellklappen-Verstellvorrichtung zum Empfang eines Wertes für den Verstellzustand der Stellklappe K von der Stellklappen-Verstellvorrichtung und dem zumindest einen Aktuator 81 zur Erzeugung eines Kommandosignals durch Regelungsvorrichtung und zum Übermitteln des Kommandosignals an den Aktuator 81 zur Einstellung der Öffnungs- und Schließstellung der jeweiligen Öffnungveränderungs-Vorrichtung 80.

Die Regelungsvorrichtung 60 kann bei diesem Ausführungsbeispiel mit einem in einer in der Stellklappe vorgesehenen Leitungen integrierten Strömungsförderantrieb in Verbindung stehen.

Bei den erfindungsgemäßen Ausführungsformen mit einer Regelungsfunktion kann die Sensorvorrichtung 70 einen Sensor 71 zur Erfassung des Strömungszustands auf der Oberseite 11 der Stellklappe K anliegenden oder abgelösten Strömung aufweisen. Alternativ oder zusätzlich kann ein Sensor 71 zur Erfassung der Strömungsgeschwindigkeit vorgesehen sein und/oder kann der Sensor 71 ein Piezo-Wandschubspannungssensor zur Erfassung der Wandschubspannung sein.

Die Regelungsvorrichtung kann mit einer oder mehreren Pumpen funktional verbunden sein, die in Kanälen der Stellklappe K oder der Hochauftriebsklappe K und/oder mit dem zumindest einen Kanal 37 im Hauptflügel 1 angeordnet ist. Bei dem in der Figur 5 dargestellten Ausführungsbeispiel erfolgt die Regelung des Strömungszustands mittels zweier in der Stellklappe K oder der Hochauftriebsklappe installierten Pumpen 41, 42 und einer mit dem Kanal 37 im Hauptflügel 1 integrierten Pumpe 47. Bei einer Variante weist der Hauptflügel 1 keinen Kanal 37 auf. Auch kann ein Kanal 37 im Hauptflügel vorgesehen sein, dessen Strömung nicht von einer Pumpe 47 beeinflusst wird. Dabei ist also eine Anordnung eines Hauptflügels und einer Anordnung einer Stellklappe K mit einer Vorrichtung zur Strömungsbeeinflussung an derselben nach einer erfindungsgemäßen Ausführungsform vorgesehen, wobei der Hauptflügel 1 einen Kanal 37 aufweist, der von einer an der Druckseite 1 b des Hauptflügels 1 angeordneten Einlassöffnungen 28 zu einer an rückseitigen, der Stellklappe K zugewandten Oberfläche 1c des Hauptflügels 1 angeordneten Luftausblas-Öffnung 27 verläuft, so dass die zwischen der Ausblasöffnung 28 und der Luftausblas-Öffnung 27 auftretende Luftströmung 28 die Strömung im Spalt G zwischen dem Hauptflügel 1 und der Stellklappe K beeinflusst.

Die erfindungsgemäße Vorrichtung zur Strömungsbeeinflussung kann also eine Ausblasöffnungs-Veränderungsvorrichtung 80 aufweisen, die an zumindest einer Einlassöffnung 22, 23, 24 an der Hochauftriebsklappe 10 und/oder an zumindest einer Ausblasöffnung 21 der Hochauftriebsklappe 10 zum Öffnen und Schließen und/oder zum Vergrößern oder Verkleinern der zumindest einen Einlassöffnung und/oder der zumindest einen Ausblasöffnung vorgesehen ist. Zu diesem Zweck weist die Ausblasöffnungs-Veränderungsvorrichtung 80 einen an dieser angeschlossenen Aktuator 85 zum Betätigen der jeweiligen Ausblasöffnungs-Veränderungsvorrichtung 80 auf. Die Ausblasöffnungs-Veränderungsvorrichtung 80 kann z.B. ein Schieber 83 sein. Der Aktuator 85 zur Betätigung der jeweiligen Ausblasöffnungs-Veränderungsvorrichtung 80, 81, 82 kann insbesondere ein Piezo-Aktuator sein. In der Figur 7 ist an der Öffnung 22 und an den Öffnungen 23, 24 jeweils eine Ausblasöffnungs-Veränderungsvorrichtung 80 und somit eine erste Ausblasöffnungs-Veränderungsvorrichtung 81 bzw. eine zweite Ausblasöffnungs-Veränderungsvorrichtung 82 jeweils mit einem Aktuator 85 zu deren Betätigung angeordnet, wobei die Ausblasöffnungs-Veränderungsvorrichtung 81, 82 an den Öffnungen 23, 24 derart ausgeführt ist, dass diese beide Öffnungen 23, 24 in verschiedenen Öffnungsstellungen öffnen oder schließen kann. Auf diese Weise kann die Regelungsvorrichtung 60 nach vorbestimmten Vorgaben oder Regelungszielen das Abzweigen von Luft durch die zumindest eine Einlassöffnung 22, 23, 24 und/oder das Ausblasen von Luft durch die zumindest eine Ausblasöffnung 21 erreichen. Auf diese Weise kann die Umströmung der Hochauftriebsklappe unabhängig von dem Verstellzustand der Hochauftriebsklappe geregelt und in vorbestimmter Weise stabilisiert werden. Erfindungsgemäß kann auch an allen Einlass- und/oder allen Ausblasöffnungen der Stellklappe oder des Hauptflügels eine Ausblasöffnung-Veränderungsvorrichtung angeordnet sein, die durch eine Ansteuerungsvorrichtung 50 oder eine Regelungsvorrichtung angesteuert wird. Zusätzlich kann im Hauptflügel 1 ein Luftleitungskanal 37 angeordnet sein, wie dieser in der Figur 4 dargestellt ist. Dabei kann am Auslass 27 ebenfalls eine Ausblasöffnung-Veränderungsvorrichtung 80 vorgesehen sein, die ebenfalls von einer Regelungsvorrichtung angesteuert werden kann.

Weiterhin kann bei diesen Ausführungsformen auch vorgesehen sein, dass der Regelungsvorrichtung 60 von einer Verstellvorrichtung - bei einer entsprechenden funktionalen Kopplung der Regelungsvorrichtung 60 mit der Klappen-Verstellvorrichtung - der Verstellzustand der Hochauftriebsklappe 10 übermittelt wird, so dass die Regelungsvorrichtung bei der Ermittlung der Ansteuerungsgrößen für die jeweilige Ausblasöffnungs-Veränderungsvorrichtung auch den Verstellzustand der Hochauftriebsklappe 10 berücksichtigen kann.

Generell bedeutet in diesem Zusammenhang das Öffnen oder das Schließen einer Öffnung nicht nur das vollständige Öffnen oder Schließen der Öffnung, sondern auch das teilweise Öffnen oder Schließen der Öffnung.

In der Figur 6 ist ein Ausführungsbeispiel einer erfindungsgemäßen Anordnung einer Hochauftriebsklappe 10 mit einer Vorrichtung zur Strömungsbeeinflussung an derselben dargestellt, bei der die Regelungsvorrichtung 60 eine Regelung der Umströmung der Klappe sowohl mit einer Pumpe 40 als auch mit einer Ausblasöffnungs-Veränderungsvorrichtung 80 - in jeweils beschriebener Weise - vornimmt. Auch diese Ausführungsform kann nach der Erfindung mit allen Varianten an Kanälen, Einlass-Öffnungen und Auslass-Öffnungen am Hauptflügel 1 und/oder an der Hochauftriebsklappe 10 kombiniert werden. Die Figur 7 zeigt eine solche Anordnung, bei der zwei Pumpen 41, 42 in oder an Kanalabschnitten der Hochauftriebsklappe 10 installiert sind, wobei die Pumpen 41, 42 in dem zentralen Kanal 30 angeordnet sind.

Die Figur 6 zeigt eine schematische Darstellung einer weiteren erfindungsgemäßen Ausführungsform einer Anordnung eines Flügels mit einer Stellklappe wie einer Hochauftriebsklappe mit einer Vorrichtung zur Strömungsbeeinflussung an derselben, bei der sich der Luftstrom an verschiedenen Einlassöffnungen und an zwei Ausblasöffnungen im Bereich zwischen dem Hauptflügel und der Hochauftriebsklappe sowie in diesen verbindenden Kanälen auf aktive Weise mittels einer geregelten Pumpe und geregelter Öffnungs- und Schließvorrichtungen an den Ausblasöffnungen und an den Einlassöffnungen bildet. Bei einer bestimmten Klappenstellung, die insbesondere die Landestellung sei kann, ist eine oder beide der vorderen Luft-Ausblasöffnungen 21, 26 geöffnet und geregelt, die hintere Ausblasöffnung geschlossen. Die Ausblasöffnungen können insbesondere abhängig von der jeweils vorgesehenen Verstellzustand der Stellklappe hinsichtlich des Öffnungszustands derselben durch Betätigung einer jeweiligen Öffnungveränderungs-Vorrichtung angesteuert oder geregelt sein. So kann für einen andere Klappen-Verstellzustand, und insbesondere für die Startstellung, vorgesehen sein, dass die vordere der beiden Luft-Ausblasöffnungen geschlossen und die hintere Ausblasöffnung geöffnet ist und dabei deren Öffnungszustand nach einer beschriebenen Ausführungsform mittels einer Regelungsvorrichtung geregelt wird. Der Öffnungszustand von einer oder mehreren der Einlassöffnungen kann dabei durch Betätigung einer jeweiligen Öffnungveränderungs-Vorrichtung mittels einer Steuerungsvorrichtung 50 angesteuert oder ebenfalls von einer Regelungsvorrichtung 60 geregelt werden.

Erfindungsgemäß ist also ein Flugzeug mit einem aerodynamischen Körper und einer daran bewegbaren Stellklappe mit einer Steuerungsvorrichtung mit einer Klappen-Ansteuerfunktion zur Einstellung der Stellklappen nach einer Ausführungsform der Erfindung vorgesehen. Dabei kann vorgesehen sein,
- dass mit der Luftleitung 30, 31, 32, 33, 34, 35, 36 ein Strömungsförderantrieb 40, 41, 42 zur Beeinflussung der Strömung innerhalb der Luftleitung 30, 31, 32, 33, 34, 35, 36 integriert ist, und
- dass aufgrund von Steuerungskommandos die Steuerungsvorrichtung Ansteuerungskommandos zur Einstellung eines Verstellzustands der Stellklappen K und Ansteuerungskommandos an den Strömungsförderantrieb 40, 41, 42 zur Einstellung des Durchsatzes des Strömungsförderantriebs 40, 41, 42 erzeugt und an diese übermittelt.

Die Stellklappe K kann insbesondere eine erste vordere Luftausblas-Öffnung 26 und zumindest eine zweite hintere Luftausblas-Öffnung 21 aufweisen, wobei die zweite hintere Luftausblas-Öffnung 21 in der Strömungsrichtung S gesehen hinter der ersten vorderen Luftausblas-Öffnung (26) und in dem vorderen sich von 3 % bis 15 % der Klappentiefe KT erstreckenden Bereich 10a der Stellklappe K gelegen ist. Weiterhin kann an der ersten Ausblasöffnung 26 und an zumindest einer zweiten Ausblasöffnung 21 der Stellklappe K eine Öffnungveränderungs-Vorrichtung 80 zum Öffnen und Schließen der jeweiligen Ausblasöffnung angeordnet sein. Die Ansteuerungsvorrichtung 50 kann mit den Öffnungveränderungs-Vorrichtungen 80 zur Steuerung der jeweiligen Öffnungveränderungs-Vorrichtung 80 funktional in Verbindung stehen und von dieser als Eingangsgröße den Verstellzustand der Stellklappe K empfangen. Eine mit dem jeweiligen Aktuator 81 funktional in Verbindung stehende Ansteuerfunktion kann zur Erzeugung eines Kommandosignals zur Steuerung des Aktuators 81 aufweisen, die aus dem Verstellzustand der Stellklappe K ein entsprechendes Signal zum Öffnen und Schließen der zumindest einen Ausblasöffnung und/oder der zumindest einen Auslassöffnung erzeugt und an den Aktuator 81 übermittelt.

Dabei kann die Steuerungsvorrichtung 50 eine Funktion zur Einstellung eines Verstellzustands der Stellklappen K aufgrund von Steuerungskommandos bei der Kommandierung von Verstellzuständen von Stellklappen K den Durchsatz des Strömungsförderantriebs 40, 41, 42 und des Zustands der den Luftausblas-Öffnungen 21, 26 zugeordneten Öffnungveränderungs-Vorrichtungen 80 aufweisen, wobei
- bei der Kommandierung eines ersten Verstellbereichs von Stellklappen K für die erste vordere Luftausblas-Öffnung 26 durch Ansteuerung der dieser zugeordneten Öffnungveränderungs-Vorrichtung 80 einen geschlossenen Zustand vorsieht und
- bei der Kommandierung eines zweiten Verstellbereichs von Stellklappen K für die erste vordere Luftausblas-Öffnung 26 durch Ansteuerung der dieser zugeordneten Öffnungveränderungs-Vorrichtung 80 einen offenen Zustand vorsieht,

Die Funktion zur Einstellung des Zustands der den Luftausblas-Öffnungen 21, 26 zugeordneten Öffnungveränderungs-Vorrichtungen 80 kann derart ausgeführt sein, dass bei der Kommandierung eines zweiten Verstellbereichs von Stellklappen K für die erste vordere Luftausblas-Öffnung 26 durch Ansteuerung der dieser zugeordneten Öffnungveränderungs-Vorrichtung 80 einen offenen Zustand vorsieht und zumindest in Zeitabschnitten gleichzeitig die zweite Luftausblas-Öffnung 21 durch Ansteuerung der dieser zugeordneten Öffnungsveränderungs-Vorrichtung 80 einen geschlossenen Zustand vorsieht. Insbesondere kann dabei vorgesehen sein, dass bei dem zweiten Verstellbereich die Stellklappe K weiter ausgefahren ist als bei dem ersten Verstellbereich der Stellklappe K.

An den Seitenflächen der Stellklappe K, d.h. an dessen Oberseite und/oder Unterseite können in der Klappentiefen-Richtung KT gesehen folgende Öffnungen vorgesehen sein:
- zumindest eine Luftausblas-Öffnung, die im in Strömungsrichtung gesehen vorderen und sich bis zu 15% der Klappentiefe KT erstreckenden Bereich 10a der Stellklappe K angeordnet ist und
- zumindest eine Lufteinlass-Öffnung 23, 24, 25, die auf der Oberseite der Stellklappe und im in Strömungsrichtung gesehen hinteren sich zwischen 30 % und 90 % der Klappentiefe KT erstreckenden Bereich 10b der Stellklappe K und/oder auf der Oberseite der Stellklappe im von 90 % bis 100 % der Klappentiefe KT erstreckenden Hinterkantenbereich 10c und/oder auf der Unterseite der Stellklappe im von 90 % bis 100 % der Klappentiefe KT erstreckenden Hinterkantenbereich 10c der Stellklappe K angeordnet ist.

Die Steuerungsvorrichtung mit einer Klappen-Ansteuerfunktion zur Einstellung der Stellklappen K kann eine Ansteuerungsvorrichtung 50 zur Steuerung des Strömungsförderantriebs 40, 41, 42 aufweisen. Alternativ kann die Steuerungsvorrichtung mit einer Klappen-Ansteuerfunktion zur Einstellung der Stellklappen K eine Regelungsvorrichtung 60 zur Steuerung des Strömungsförderantriebs 40, 41, 42 aufweisen.

Bei den erfindungsgemäßen Ausführungsformen kann vorgesehen sein, dass der zwischen dem Hauptflügel 1 und der Stellklappe K ausgebildete Spalt G derart gestaltet ist, dass dieser nicht aerodynamisch wirksam ist, d.h. dass es sich bei der Stellklappe um eine sogenannte "spaltlose Klappe" handelt. Bei diesen Ausführungsformen ist kein in den Spalt G einmündender Kanal 37 des Hauptflügels vorgesehen.

## Patentansprüche

1. Flügel eines Flugzeugs mit einem Hauptflügel (H) und einer an diesem angeordneten Stellklappe (K), die sich entlang einer Klappentiefenrichtung (KT) erstreckt, die entlang einer Strömungsrichtung (S) einer an der Stellklappe (K) bestimmungsgemäß anliegenden Strömung verläuft, und die aufweist: eine an einer Oberseite (11) gelegene erste Oberfläche, die an einer durch die bestimmungsgemäße Strömungsrichtung (S) bestehenden Saugseite gelegen ist, eine an einer Unterseite (12) gelegene zweite Oberfläche, die an einer durch die bestimmungsgemäße Strömungsrichtung (S) bestehenden Druckseite (B)gelegen ist, zumindest eine Luftausblas-Öffnung, zumindest eine Luftleitung (30, 31, 32, 33, 34, 35, 36), einen in der Luftleitung (30, 31, 32, 33, 34, 35, 36) integrierten Strömungsförderantrieb (40, 41, 42) zur Beeinflussung der Strömung innerhalb der Luftleitung (30, 31, 32, 33, 34, 35, 36), wobei:
• zumindest eine mittels des Strömungsförderantriebs (40, 41, 42) bei einer bestimmungsgemäß anliegenden Strömung als Luftausblas-Öffnung (21) realisierte Öffnung im in Klappentiefenrichtung (KT-K) gesehen vorderen und sich bis zu 15% der Klappentiefe erstreckenden Bereich (10a) der Stellklappe (K) angeordnet ist, und
• zumindest eine mittels des Strömungsförderantriebs (40, 41, 42) bei einer bestimmungsgemäß anliegenden Strömung als Lufteinlass-Öffnung (23) realisierte Öffnung, die auf der Oberseite der Stellklappe (K) und im in Klappentiefenrichtung (KT-K) gesehen hinteren sich zwischen 30 % und 90 % der Klappentiefe (KT) erstreckenden Bereich (10b, 10c) der Stellklappe (K) und/oder in der ersten Oberfläche der Stellklappe im von 90 % bis 100 % der Klappentiefe (KT) erstreckenden Hinterkantenbereich (10c) und/oder in der zweiten Oberfläche der Stellklappe im von 90 % bis 100 % der Klappentiefe (KT) erstreckenden Hinterkantenbereich (10c) der Stellklappe (K) angeordnet ist,
**dadurch gekennzeichnet,**
**dass** zwischen dem Hauptflügel und die Stellklappe (K) ein Spalt ausgebildet ist, der ein in Bezug auf die Hauptflügel-Tiefenrichtung oberes Ende und ein unteres Ende definiert, zwischen denen ein Kanal derart ausgebildet ist, dass sich der Hauptflügel und die Stellklappe (K) in der Tiefenrichtung des Hauptflügels gesehen in allen Stellungen der Stellklappe (K) überlappen,
**dass** eine vordere Luftausblas-Öffnung (26) in einem vorderen Bereich (10a) der Stellklappe (K) gelegen ist, der bei einer Stellung der Stellklappe (K) von 60 Grad ± 8 Grad oder bei einer voll ausgefahrenen Stellung der Stellklappe (K) in der Flügeldickenrichtung (FD-H) des Hauptflügels (1) gesehen unterhalb der hinteren oberen Kante (3) des Hauptflügels (1) gelegen ist und der sich von dem Ort, der genau unterhalb der hinteren oberen Kante (3) des Hauptflügels (1) gelegen ist, in zwei zueinander entgegen gesetzten Richtungen der Strömungsrichtung um 3 % der Klappentiefe (KT-K) erstreckt.

2. Flügel nach dem Anspruch 1, **dadurch gekennzeichnet, dass** der Spalt zwischen der Druckseite und der Saugseite aerodynamisch nicht wirksam ist.

3. Flügel nach einem der vorstehenden Ansprüche, **dadurch gekennzeichnet, dass** die Stellklappe (K) eine an die Luftleitung (30, 31, 32, 33, 34, 35, 36) angeschlossene hintere Luftausblas-Öffnung (21) aufweist, die in der Strömungsrichtung (S) gesehen hinter der vorderen Luftausblas-Öffnung (26) und in dem vorderen sich von 3 % bis 15 % der Klappentiefe (KT) erstreckenden Bereich (10a) der Stellklappe (K) gelegen ist.

4. Flügel nach einem der vorstehenden Ansprüche, **dadurch gekennzeichnet, dass** die Stellklappe (K) in der Klappentiefe (KT) gesehen eine Konturlinie (K_{L}) des vorderen Bereichs (10a) der Stellklappe (K) aufweist, die sich entlang der Oberseite (11) in Strömungsrichtung (S) oder in Klappentiefenrichtung (KT) gesehen sich von einem Krümmungsradius, der den Betrag von 3 % der Profiltiefe (P-K) der Stellklappe (K) hat, kontinuierlich steigend zu einem Krümmungsradius verändert, der den Betrag von 12 % der Profiltiefe (P-K) der Stellklappe (K) hat, wobei die Profiltiefe (P-K) jeweils an derjenigen Stelle in der Spannweitenrichtung (SW-K) der Stellklappe (K) maßgebend ist, an der zumindest eine Auslassöffnung (21, 26) gelegen sind.

5. Flügel nach einem der vorstehenden Ansprüche, **dadurch gekennzeichnet, dass** mehrere Luftausblas-Öffnungen (21, 26) in Spannweitenrichtung (SW-K) und im bis zu 15% der Klappentiefe (KT) erstreckenden Bereich nebeneinander angeordnet sind.

6. Flügel nach einem der voranstehenden Ansprüche, **dadurch gekennzeichnet, dass** mehrere Lufteinlass-Öffnungen (22, 23, 24) in Spannweitenrichtung (SW-K) nebeneinander angeordnet sind.

7. Flügel nach einem der voranstehenden Ansprüche, **dadurch gekennzeichnet, dass** die Stellklappe (K) eine Hochauftriebsklappe ist.

## Claims

1. Aircraft wing with a main wing (H) and a regulating flap (K) arranged on the latter extending along a chord direction (KT) of the flap that runs along a flow direction (S) of a flow applied as intended to the regulating flap (K), and having: a surface situated on a top side (11), which first surface is situated on a suction side existing due to the intended flow direction (S), a second surface situated on a bottom side (12), which second surface is situated on a pressure side (B) existing due to the intended flow direction (S), at least one air outlet opening, at least one air conduit (30, 31, 32, 33, 34, 35, 36), a flow support drive (40, 41, 42) integrated in the air conduit (30, 31, 32, 33, 34, 35, 36) for influencing the flow within the air conduit (30, 31, 32, 33, 34, 35, 36), wherein:
■ at least one opening realized as an air outlet opening (21) by means of the flow support drive (40, 41, 42) with a flow applied as intended, is arranged in the front area (10a) of the regulating flap (K) when seen in the chord direction (KT-K) of the flap, said area extending across up to 15% of the chord of the flap, and
■ at least one opening realized as an air inlet opening (23) by means of the flow support drive (40, 41, 42) with a flow applied as intended, is arranged on the top side of the regulating flap (K) and in the rear area (10b, 10c) of the regulating flap (K) extending when seen in the chord direction (KT-K) of the flap across 30% to 90% of the chord of the flap (KT) and/or in the first surface of the regulating flap in the trailing edge area (10c) extending across 90% to 100% of the chord of the flap (KT) and/or in the second surface of the regulating flap in the trailing edge area (10c) of the regulating flap (K) extending across from 90% to 100% of the chord of the flap (KT),
**characterized in that**,
between the main wing and the regulating flap (K) a gap is formed, which defines an upper end and a lower end relative to the main wing chord direction, between which a channel is formed in such a way that the main wing and the regulating flap (K), when seen in the chord direction of the main wing, overlap in all adjustment positions of the regulating flap (K),
a front air blow-out opening (26) is situated in a front area (10a) of the regulating flap (K) which, in the case of an adjustment position of the regulating flap (K) of 60 degrees ± 8 degrees or in the case of a fully extended adjustment position of the regulating flap (K), when seen in the wing thickness direction (FD-H) of the main wing (1), is situated below the rear upper edge (3) of the main wing (1) and which extends across 3% of the chord of the flap (KT-K) from the point which is situated precisely below the rear upper edge (3) of the main wing (1), in two opposite directions of the flow direction.

2. Wing according to claim 1, **characterized in that** the gap between the pressure side and the suction side is not aerodynamically effective.

3. Wing according to one of the preceding claims, **characterized in that** the regulating flap (K) has a rear air blow-out opening (21) connected to the air conduit (30, 31, 32, 33, 34, 35, 36) which, when seen in the flow direction (S) is situated behind the front air blow-out opening (26) and in the front area (10a) of the regulating flap (K) extending across 3% to 15% of the chord of the flap (KT).

4. Wing according to one of the preceding claims, **characterized in that** the regulating flap (K), when seen in the chord of the flap (KT), has a contour line (K_{L}) of the front area (10a) of the regulating flap (K) which, when seen in the flow direction (S) or in the chord direction (KT) of the flap, continuously increases along the top side (11) from a curvature radius that amounts to 3% of the profile chord (P-K) of the regulating flap (K), to a curvature radius that amounts to 12% of the profile chord (P-K) of the regulating flap (K), based on the profile chord (P-K) at each respective point in the spanwise direction (SW-K) of the regulating flap (K) at which at least one outlet opening (21, 26) is situated.

5. Wing according to one of the preceding claims, **characterized in that** several air blow-out openings (21, 26) are arranged next to each other in the spanwise direction (SW-K) and in the area extending across up to 15% of the chord of the flap (KT).

6. Wing according to one of the preceding claims, **characterized in that** several air inlet openings (22, 23, 24) are arranged next to each other in the spanwise direction (SW-K).

7. Wing according to one of the preceding claims, **characterized in that** the regulating flap (K) is a high-lift flap.

## Revendications

1. Aile d'avion, comprenant une aile principale (H) et un volet (K) qui est disposé sur celle-ci et s'étend le long d'une direction de profondeur de volet (KT), laquelle s'étend le long d'un sens d'écoulement (S) d'un écoulement appliqué de manière définie contre le volet (K), et qui présente une première surface, située sur une face supérieure (11), qui se trouve sur un extrados déterminé par le sens d'écoulement (S) défini, une deuxième surface, située sur une face inférieure (12), qui se trouve sur un intrados (B) déterminé par le sens d'écoulement (S) défini, au moins une ouverture de soufflage d'air, au moins une conduite d'air (30, 31, 32, 33, 34, 35, 36), un moyen de commande de débit d'écoulement (40, 41, 42) intégré dans la conduite d'air (30, 31, 32, 33, 34, 35, 36) et destiné à influencer l'écoulement dans la conduite d'air (30, 31, 32, 33, 34, 35, 36), sachant que :
- au moins une ouverture, réalisée en tant qu'ouverture de soufflage d'air (21) à l'aide du moyen de commande de débit d'écoulement (40, 41, 42), pour un écoulement appliqué de manière définie, est disposée dans la partie antérieure (10a) du volet (K), vu dans le sens de la profondeur de volet (KT-K), s'étendant jusqu'à 15 % de la profondeur de volet, et
- au moins une ouverture, réalisée en tant qu'ouverture d'admission d'air (23) à l'aide du moyen de commande de débit d'écoulement (40, 41, 42), pour un écoulement appliqué de manière définie, qui est disposée sur la face supérieure du volet (K) et, vu dans le sens de la profondeur de volet (KT-K), dans la partie postérieure (10b, 10c) s'étendant entre 30 % et 90 % de la profondeur de volet (KT) du volet (K) et/ou dans la première surface du volet, dans la partie de bord postérieure (10c) s'étendant de 90 % à 100 % de la profondeur de volet (KT), et/ou dans la deuxième surface du volet, dans la partie de bord postérieure (10c) s'étendant de 90 % à 100 % de la profondeur de volet (KT),
**caractérisée en ce que**
un interstice est formé entre l'aile principale et le volet (K), qui définit une extrémité supérieure et une extrémité inférieure, rapporté au sens de la profondeur de l'aile principale, entre lesquelles est formé un canal de manière telle que l'aile principale et le volet (K) se chevauchent dans toutes les positions du volet (K), vu dans le sens de la profondeur de l'aile principale,
une ouverture de soufflage d'air antérieure (26) se situe dans une partie antérieure (10a) du volet (K) qui, avec une position de 60 degrés ± 8 degrés du volet (K) ou avec une position complètement déployée du volet (K), se situe sous le bord supérieur postérieur (3) de l'aile principale (1), vu dans le sens de l'épaisseur (FD-H) de l'aile principale (1), et qui s'étend sur 3 % de la profondeur de volet (KT-K) dans deux directions mutuellement opposées, à partir de l'endroit qui se trouve exactement sous le bord supérieur postérieur (3) de l'aile principale (1).

2. Aile selon la revendication 1, **caractérisée en ce que** l'interstice entre l'intrados et l'extrados n'a pas d'action aérodynamique.

3. Aile selon une des revendications précédentes, **caractérisée en ce que** le volet (K) présente une ouverture de soufflage d'air postérieure (21) qui est raccordée à la conduite d'air (30, 31, 32, 33, 34, 35, 36) et, vu dans le sens de l'écoulement (S), se situe derrière l'ouverture de soufflage d'air antérieure (26) et dans la partie antérieure (10a) du volet (K) s'étendant sur 3 % à 15 % de la profondeur de volet (KT).

4. Aile selon une des revendications précédentes, **caractérisée en ce que** le volet (K), vu dans la profondeur de volet (KT), présente une ligne de contour (K_{L}) de la partie antérieure (10a) du volet (K), qui change le long de la face supérieure (11), vu dans le sens de l'écoulement (S) ou dans le sens de la profondeur du volet (KT), à partir d'un rayon de courbure valant 3 % de la profondeur de profil (P-K) du volet (K), en augmentant de façon continue jusqu'à un rayon de courbure valant 12 % de la profondeur de profil (P-K) du volet (K), la profondeur de profil (P-K) étant déterminante respectivement à l'emplacement dans le sens de l'envergure (SW-K) du volet (K), où se situe au moins une ouverture de soufflage (21, 26).

5. Aile selon une des revendications précédentes, **caractérisée en ce que** plusieurs ouvertures de soufflage d'air (21, 26) sont disposées les unes à côté des autres dans le sens de l'envergure (SW-K) et dans la partie s'étendant jusqu'à 15 % de la profondeur de volet (KT).

6. Aile selon une des revendications précédentes, **caractérisée en ce que** plusieurs ouvertures d'admission d'air (22, 23, 24) sont disposées les unes à côté des autres dans le sens de l'envergure (SW-K).

7. Aile selon une des revendications précédentes, **caractérisée en ce que** le volet (K) est un volet hypersustentateur.
